# EUROPEAN PATENT SPECIFICATION

(11) **EP 4 238 082 B1**
(45) Date of publication and mention of the grant of the patent: **04.03.2026**
(21) Application number: 21887167.1
(22) Date of filing: 07.10.2021
(51) Int. Cl.: G09B 23/28, G09B 19/24, A61M 5/42, G09B 23/30

(54) **TRAINING PROSTHETIC FOR SELF-CANNULATION TRAINING**
TRAININGSPROTHESE FÜR SELBSTKNOMULIERUNGSTRAINING
PROTHÈSE D'ENTRAÎNEMENT POUR S'ENTRAÎNER À L'AUTO-CANULATION

(30) Priority: 28.10.2020 US 202017082573
(43) Date of publication of application: 06.09.2023
(73) Proprietor: Fresenius Medical Care Holdings, Inc., Waltham, MA 02451-1457 (US)
(72) Inventor: TREVINO, Samuel, Waltham, MA 02451-1457 (US); SLOAT, Daniel L., Waltham, MA 02451-1457 (US); FINN, Mary Vasseur, Waltham, MA 02451-1457 (US); MERRIKIN, Derek S., Waltham, MA 02451-1457 (US)
(74) Representative: Lorenz Seidler Gossel Part. mbB
(86) International application number: PCT/US2021/053876
(87) International publication number: WO 2022/093507

(56) References cited:
- JP-A- 2010 210 710
- KR-B1- 102 052 037
- US-A1- 2006 129 144
- US-A1- 2012 290 061
- US-A1- 2017 316 719
- US-A1- 2018 158 373

## Description

### FIELD OF THE INVENTION

The present invention relates to a training system and method for learning and practicing self-cannulation as would be needed for home hemodialysis patients.

### BACKGROUND OF THE INVENTION

Self-cannulation is a huge hurdle for patients to overcome when moving into the arena of home hemodialysis. Self-cannulation is a stressful process that can take weeks or months to achieve and master. U.S. Patent Application Publication No. US 2017/0316719 A1 describes a cannulation simulation device designed to teach dialysis technicians/nurses or patients to cannulate arteriovenous (AV) fistulas for hemodialysis. A need exists for a device that can help augment a training regimen for self-cannulation and help a patient to achieve self-cannulation sooner than would be achieved with traditional training methods. A need also exists for a training method that enables a home hemodialysis trainee to build confidence and muscle memory prior to a first real self-cannulation experience.

### SUMMARY OF THE INVENTION

An objective of the present invention is to provide a training opportunity for self-cannulation as a means of building confidence and developing muscle memory prior to actual self-cannulation for home hemodialysis patients. This and other objectives are achieved according to the present invention by using the modular training system described herein. The system provides a device that produces a realistic "flash" of blood-like fluid in a simulated cannula upon proper cannulation. The system provides tactile feedback if the simulated access is improperly cannulated or infiltrated during cannulation. The system provides realistic skin-like material on outermost layers to create an illusion and feel as though the user is cannulating their own appendage. The system provides adjustable anchor-points for the simulated access to mimic a planned, existing, or potential access location and configuration in the patient's body. The system uses materials for and in the simulated access to give a trainee a realistic sensation and pressure when the simulated cannula needle is inserted into the simulated access.

The modular system can include a synthetic skin covering or overlay, for example, a layer of replaceable synthetic skin or fabric that can be anchored to other system components as a covering. The simulated skin covering can exhibit a correct resistance to puncturing by the simulated cannula needle, a material that enables a trainee or user to discern the position of a simulated access underneath the simulated skin covering, a correct skin-like stretching and movement, combinations thereof, and the like. The simulated skin covering can comprise a material that enables a trainee or user to see a bulge, highlights, and shadows caused by an underlying simulated access so that the trainee or user can visibly identify where the simulated access is located underneath the simulated skin covering. The simulated skin covering can exhibit a skin tone color to match the skin color of the trainee.

The simulated access can be made from actual graft material, or a reasonable facsimile, to produce a realistic cannulating experience. The simulated cannula can comprise flexible conductive wires and can mimic standard hemodialysis cannulation needles. The cannulation pad can comprise an underlying, protective, highly puncture-resistant layer, anchor, or shielding that prevents a trainee or user from stabbing himself or herself. The system can include a flexible adjustable armband in the form of a stretchy closable band that wraps around a trainee's appendage enabling the trainee to attach the modular system components to the trainee's appendage. Although many embodiments described herein exemplify the system being used on a forearm, it is to be understood that embodiments of the invention are also provided for using the system on a leg or on other parts of a body, which might be viable for hemodialysis cannulation for a particular trainee.

According to the present invention, a self-cannulation training system is provided that comprises a cannulation pad, a simulated access, a simulated cannula, a control unit, and at least one indicator. The cannulation pad comprises a cannulation electrical circuit conductor, an infiltration electrical circuit conductor, and an insulating layer electrically insulating the cannulation electrical circuit conductor from the infiltration electrical circuit conductor. The simulated access is configured to be electrically connected to the cannulation electrical circuit conductor and comprises an outer sheath and an electrically conductive material retained inside the sheath. The simulated cannula has a length and comprises a cannulation needle at a first end thereof, a cannula connector at a second, opposite end thereof, and an electrical conductor extending along the length and electrically connecting the cannulation needle with the cannula connector. The control unit comprises a power source and an electrical connector for connecting the power source to both the cannulation electrical circuit conductor and to the infiltration electrical circuit conductor. The control unit also has a second electrical connector for connecting the power source to the cannula connector of the simulated canula.

According to exemplary embodiments, the indicator is in electrical contact with the electrical conductor and is configured to be activated when the cannula needle electrically contacts the cannulation electrical circuit conductor to form a completed cannulation electrical circuit. The second indicator can be different than the first indicator and can be in electrical contact with the electrical conductor of the simulated cannula. The second indicator can be configured to be activated when the cannula needle electrically contacts the infiltration electrical circuit conductor to complete an infiltration electrical circuit. The first indicator can be, for example, a red LED and can signal that a proper cannulation of the simulated cannula into the simulated access, has taken place. The second indicator can be, for example, a buzzer and can indicate when an infiltration has taken place.

The system can include modular, replaceable, interchangeable components that can include, for example, an armband and wrist band, an arm cradle, a pair of simulated cannulas, a simulated skin covering, a replaceable battery, or a combination thereof. By using the training system, a method of training a patient or trainee for self-cannulation can be provided according to the present invention.

The training method of the present invention can comprise mounting the cannulation pad on the trainee or on a different person or dummy for the purpose of training a trainee. For example, the cannulation pad can be mounted on an armband worn by the trainee himself or herself. Alternatively, the trainee, helper, or dummy can have an arm placed inside the arm cradle and the cannulation pad can be mounted on the arm cradle. The cannulation pad can be a cannulation pad as described herein and can comprise a cannulation electrical circuit conductor, an infiltration electrical circuit conductor, and an insulating layer electrically insulating the cannulation electrical circuit conductor from the infiltration electrical circuit conductor. The method can involve electrically connecting a simulated access to the cannulation electrical circuit conductor. The method can involve electrically connecting a power source to both the cannulation electrical circuit conductor and to the infiltration electrical circuit conductor. The method can involve electrically connecting the power source to a simulated cannula. The simulated cannula can be a simulated cannula as described herein and can have a length, a cannulation needle at a first end, a cannula connector at a second, opposite end, and an electrical conductor extending along the length and electrically connecting the cannulation needle with the cannula connector. The cannula connector can be electrically connected to the power source. The method can comprise having the trainee insert the cannulation needle into a simulated access to train for inserting a real cannulation needle into a real access. The simulated access can be a simulated access as described herein and can comprise an outer sheath and an electrically conductive material retained inside the sheath. By practicing artificial cannulation using the training system, a trainee can become proficient at self-cannulation and be better prepared to perform true cannulation into an access or fistula when the time comes.

Methods of manufacturing the modular training system described herein are also provided and can include preparing an electrically conductive gel for filling the electrically conductive simulated access. Preparing the electrically conductive gel can comprise mixing together borax, glue, salt, and water. Preparing the cannulation pad can involve assembling together the various pad layers and components shown and described herein.

### BRIEF DESCRIPTION OF THE DRAWINGS

The invention may be more fully understood with reference to the accompanying drawings. The drawings are intended to illustrate, not limit, the present teachings.
FIG. 1 is a schematic top view of a modular self-cannulation training system according to an embodiment of the present invention.
FIG. 2 is an exploded end view of a modular system according to an embodiment of the present invention and including the armband shown in FIG. 1.
FIG. 3 is a top view of the modular system shown in FIG. 2, assembled, on an arm of a trainee, and further including a power source and two simulated cannulas connected to the control unit.
FIG. 4 is a top view of a modular system according to an embodiment of the present invention, assembled, on an arm of a trainee, and including the arm cradle shown in FIG. 1.
FIG. 5 is a schematic view showing exemplary components of the control unit shown in FIG. 1, together with the wrist band shown in FIG. 1.
FIG. 6 is a top view of one of the simulated cannulas shown in FIG. 1, with end portions of the sheath peeled away to show the conductive wire running the length of the simulated cannula.
FIG. 7A is an exploded side view of the simulated access shown in FIG. 1 and showing a stack of magnets, a magnet holder, and a conductive wire electrically connecting the stack of magnets to the interior of the simulated access.
FIG. 7B is an enlarged view of section 7B shown in FIG. 7A, and broken-away to show the conductive gel inside the simulated access.
FIG. 8 is an exploded view of the cannulation pad shown in FIG. 1, including a cannulation electrical circuit conductor and an infiltration circuit conductor separated by an insulator, and an array of magnets for magnetically attracting and holding the simulated access shown in FIGS. 1, 7A, and 7B.
FIG. 9 is a top, end perspective view of the armband shown in FIG. 1.
FIG. 10 is a top, end perspective view of the arm cradle shown in FIG. 1.
FIG. 11 is a schematic view of an electrical system including modular electrical components and circuitry according to various embodiments of the present invention.
FIG. 12 is a perspective view of yet another modular system according to an embodiment of the present invention, and that includes two simulated cannulas extending from a control unit of the system, and a simulated access.
FIG. 13 is an exploded, top, front perspective view of the fabric layers, hook fastener layers, loop fastener layers, elastomeric layers, armor layer, and other layers that together, with an electrical system, make-up the modular system shown in FIG. 12.
FIG. 14 is a schematic view of an electrical system including modular electrical components and circuitry, according to various embodiments of the present invention, and that can be used in the modular system shown in FIG. 12.
FIG. 15 is an exploded, front, perspective view of the simulated access shown in FIG. 12 and showing two pairs of serially-connected mini motors and two pairs of magnetic electrical connectors wherein one pair of magnetic electrical connectors is provided at each respective end of the simulated access.
FIG. 16 is a bottom view of a cannulation pad according to another embodiment of the present invention.
FIG. 17 is a top, perspective view of the cannulation pad shown in FIG. 16 and showing respective connector pair holders each configured for holding a pair of magnetic connectors.
FIG. 18 is a top view of the needle end of a simulated cannula that can be used with the modular system shown in FIGS. 12-17, before and after insertion into an electrically-conductive cannula needle tip.

### DETAILED DESCRIPTION OF THE INVENTION

The present invention provides a self-cannulation training system to enable patients, such as hemodialysis patients, to learn how to self-cannulate. The system comprises a cannulation pad, a simulated access, a simulated cannula, and a control unit. The cannulation comprises a cannulation electrical circuit conductor, an infiltration electrical circuit conductor, and an insulating layer electrically insulating the cannulation electrical circuit conductor from the infiltration electrical circuit conductor. The simulated access is configured to be electrically connected to the cannulation electrical circuit conductor. The simulated access comprises an outer sheath and an electrically conductive material retained inside the sheath. The electrically conductive material can be, for example, an electrically conductive gel. The simulated cannula has a length, a cannulation needle at a first end thereof, and a cannula connector at a second, opposite end thereof. An electrical conductor is provided extending along the length of the simulated cannula and electrically connects the cannulation needle with the cannula connector. The electrical conductor of the simulated cannula can be shielded. The electrical conductor can comprise, for example, a co-axial cable and the cannula connector can comprise an RCA cable connector. The control unit can comprise electrical circuitry, cable connectors, a power source, or a combination thereof. The cable connectors of the control unit can be shielded, co-axial, a combination thereof, or the like. The cable connectors of the control unit can be RCA cable connectors or the like.

The control unit can include a first electrical connector for connecting the power source to the cannulation electrical circuit conductor. The control unit can include a second electrical connector for connecting the power source to the infiltration electrical circuit conductor. The first and second connectors can be the same or different connectors. Another connector can be provided for connecting the control unit, the power source, or both, to the cannula connector.

To provide a patient with feedback during training, a first indicator can be provided in electrical contact with the electrical conductor. The first indicator can be configured to be activated when the cannula needle properly electrically contacts the conductive material retained inside the simulated access when the simulated access is in electrical connection with the cannulation electrical circuit conductor. As such, the system can be configured such that the cannula needle completes and forms a cannulation electrical circuit. The first indicator can be, for example, a light, a flashing light, a red light, an LED, a vibrator, a sound generator, a combination thereof, or the like.

A second indicator, different than the first indicator, can also be provided in electrical contact with the electrical conductor. The second indicator can be configured to be activated when the cannula needle misses or passes through the simulated access and electrically contacts the infiltration electrical circuit conductor. The system can be configured such that, in such an event, the cannula needle completes and forms an infiltration electrical circuit. The second indicator can be, for example, a light, a flashing light, a red light, an LED, a vibrator, a sound generator, a combination thereof, or the like. As an example, the first indicator can comprise a light indicator and the second indicator can comprise a vibrator, a sound alarm, or a combination thereof. The first indicator can comprise a red-light-emitting diode.

The self-cannulation training system can further comprise a second simulated cannula. The second simulated cannula has a length and can comprise a second cannulation needle at a first end thereof, a second cannula connector at a second, opposite end thereof, and a second electrical conductor extending along the length. The second electrical conductor can electrically connect the second cannulation needle with the second cannula connector. The second electrical conductor of the second simulated cannula can be shielded and can comprise a co-axial cable and the second cannula connector can comprise an RCA cable connector.

The simulated access can be electrically connected to the cannulation electrical circuit conductor or can be configured to be electrically connected to the cannulation electrical circuit conductor, for example, electrically connected using magnets. According to various embodiments, a first electrical connector can connect the power source to both the cannulation electrical circuit conductor and to the infiltration electrical circuit conductor, and a second electrical connector can connect the power source to the cannula connector.

To connect the cannulation pad to a patient, for example, to a forearm of a patient, armband can be used and can be provided as part of the system. The armband and the cannulation pad can be configured to be fastened together. A simulated skin covering can also be provided and the armband and the simulated skin covering can be configured to be fastened together, for example, with the simulated access being positioned in between. The simulated access can be positioned to be made in electrical contact with the cannulation electrical circuit conductor before the simulated access is covered by the simulated skin covering.

The simulated skin covering can exhibit a correct resistance to puncturing by the simulated cannula needle, a material that enables a trainee or user to discern the position of a simulated access underneath the simulated skin covering, a correct skin-like stretching and movement, combinations thereof, and the like. The simulated skin covering can comprise a material that enables a trainee or user to see a bulge, highlights, and shadows caused by an underlying simulated access so that the trainee or user can visibly identify where the simulated access is located underneath the simulated skin covering. The simulated skin covering has an outer surface and the outer surface can have a skin tone color, for example, tan, beige, brown black, peach, or the like. The skin tone color of the simulated skin covering can be selected to match the skin color of the patient. The outer surface can be made of a material similar to artificial human skin, for example, a material that is able to give and stretch consonant with the other components and layers. The outer surface can serve the cosmetic purpose of looking like real human skin. A skin tone color can be selected to different patient populations. Moles, freckles, tattoos, scars, combinations thereof, and the like can be added to the outside surface to replicate a particular skin and individual.

The training system can also comprise a wrist band. The wrist band and the control unit can be configured to be fastened together. The wrist band can comprise a fastener, for example, a fastener patch including at least one of hook fasteners and loop fasteners. The control unit can comprise a fastener, for example, a fastener patch including at least one of hook fasteners and loop fasteners. The fastener of the wrist band and the fastener of the control unit can be complementary to each other. The wrist band can comprise a pocket, a strap, or the like, for accommodating the power source, such as a battery pocket for accommodating a battery.

Instead of or in addition to an arm band, the self-cannulation training system can further comprise an arm cradle. The arm cradle can be, for example, tubular in shape and can have a through-hole for accommodating an arm. The arm cradle and the cannulation pad can be configured to be fastened together. The arm cradle can comprise a fastener, for example, a fastener patch including at least one of hook fasteners and loop fasteners. The cannulation pad can comprise a fastener, for example, a fastener patch including at least one of hook fasteners and loop fasteners. The arm cradle and the control unit can be configured to be fastened together. The arm cradle can comprise a second fastener patch including at least one of hook fasteners and loop fasteners, and the control unit can comprise a fastener patch including at least one of hook fasteners and loop fasteners. The arm cradle can comprise a plastic material, such as polyvinylchloride (PVC). The arm cradle can be wrapped with a fabric, rubber, textile, or elastomeric material, for example, wrapped with a NEOPRENE^{®} material, NEOPRENE^{®} being a registered trademark of DuPont Company, Wilmington, Delaware.

For the hook and loop fasteners described herein, VELCRO^{®} (available from Velcro BVBA, Deinze, Belgium) can be used. Each of the simulated skin covering, wrist band, armband, cradle cover, cannulation pad, and simulated access can independently comprise any suitable material. Exemplary materials that can be used include cotton, linen, spandex, polyester, rayon, nylon, ragadon, elastone, modal, silk, satin, leather, LYCRA^{®} (E. I. DU PONT DE NEMOURS AND COMPANY, Wilmington, Delaware), bamboo, hemp, dry-fit materials, wicking materials, breathable materials, blends of such materials, and the like materials. Organic materials can be used. The material can be comfortable. As an example, the material can comprise cotton, polyester, nylon, spandex, LYCRA^{®}, a foamed NEOPRENE^{®} material, a textile material, a blend of materials, a cotton-polyester blend material, a nylon-spandex blend material, or the like. As a further example, the material can comprise at least one of a nylon-spandex blend material and a foamed NEOPRENE^{®} material. The material can comprise a stretchable material.

The electrically conductive material of the simulated access can comprise an electrically conductive material, for example, a liquid, gel, polymer, suspension, emulsion, dispersion, or the like. The electrically conductive material can be a gel, for example, a an electrically conductive gel comprising the reaction product of borax, glue, salt, and water. Sodium chloride or other salts can be used. The outer sheath of the simulated access can comprise a self-sealing material. GORE-TEX^{®} (W. L. Gore & Associates, Inc., Newark, Delaware) can be used. Septa material as are used in self-sealing, resealing caps for vials of liquids, can be used.

The present invention also provides a method of training a patient for self-cannulation. The method involves mounting a cannulation pad on the patient. The patient can mount the cannulation pad or someone else. The cannulation pad can be a pad as described herein, for example, including a cannulation electrical circuit conductor, an infiltration electrical circuit conductor, and an insulating layer electrically insulating the cannulation electrical circuit conductor from the infiltration electrical circuit conductor. The method can further involve electrically connecting a simulated access to the cannulation electrical circuit conductor. The simulated access can be, for example, as described herein. The simulated access can comprise an outer sheath and an electrically conductive material retained inside the sheath. The method can involve, but is not limited to, electrically connecting a power source to both the cannulation electrical circuit conductor and to the infiltration electrical circuit conductor. The method can involve, but is not limited to, electrically connecting the power source to a simulated cannula, for example, a simulated cannula as described herein. The simulated cannula has a length and can comprise a cannulation needle at a first end thereof, a cannula connector at a second, opposite end thereof, and an electrical conductor extending along the length. The electrical conductor can electrically connect the cannulation needle with the cannula connector. The cannula connector can already be electrically connected to the power source or the method can involve connecting the cannula connector to the power source. The method can involve of be limited to having the patient insert the cannulation needle into the simulated access to train the patient for inserting a real cannulation needle into a real access of the patient, e.g., to carry out a self-cannulation. The method can also help train others how to carry out a cannulation of the patient.

According to the method, the patient can receive feedback about the self-cannulation carried out. For example, when the patient inserts the cannulation needle into the simulated access such that a distal tip of the cannulation needle rests inside the access, a first indicator is activated to indicate that a proper cannulation into the simulated access has been achieved. For example, if the insertion results in a positioning of the needle that enables an unrestricted fluid communication between the interior of the simulated access and an opening at the distal tip of the needle, the first indicator is activated.

The method can involve providing feedback in the form of signaling a fault, error, or alarm, when the cannulation does not result in a proper positioning of the tip of the needle. For example, when the patient inserts the cannulation needle into the cannulation pad such that the distal tip of the cannulation needle contacts the infiltration electrical circuit conductor, a second indicator can be activated to indicate that an improper cannulation into the simulated access has resulted. The first indicator can comprise a red light, for example, a red-light emitting LED. The second indicator can comprise, for example, a vibrator or sound-generator.

The method can involve mounting the cannulation pad on the patient. The mounting can comprise fastening an arm band to a forearm of the patient. The method can involve fastening the cannulation pad to the arm band. Mounting the cannulation pad on the patient can comprise placing a forearm of the patient into an arm cradle. The method can involve fastening the cannulation pad to the arm cradle. The method can involve fastening a simulated skin covering over the simulated access before inserting the cannulation needle into the simulated access. The method can involve selecting a skin tone color that matches the skin tone of the patient.

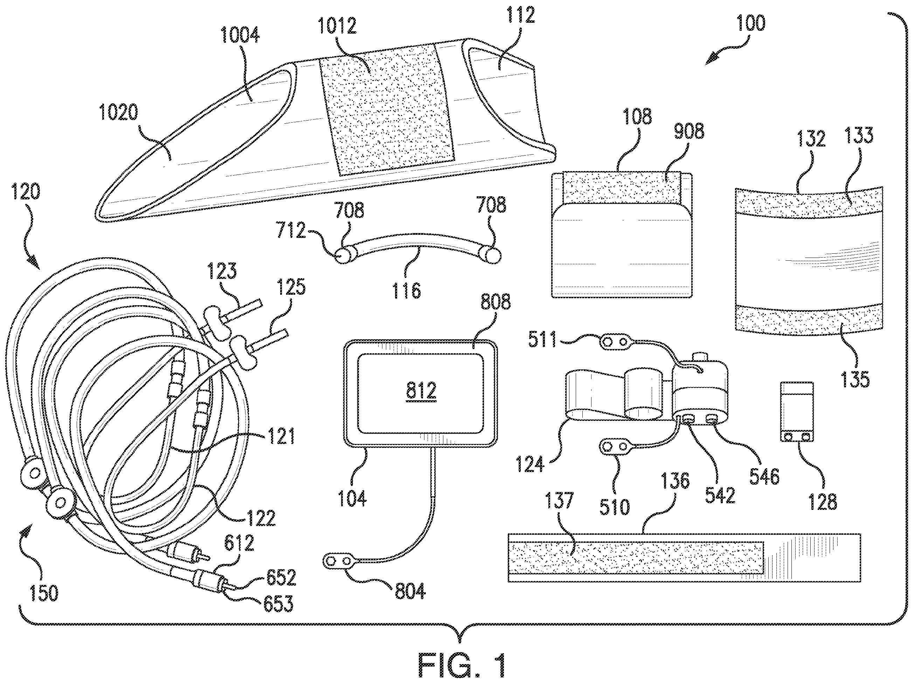

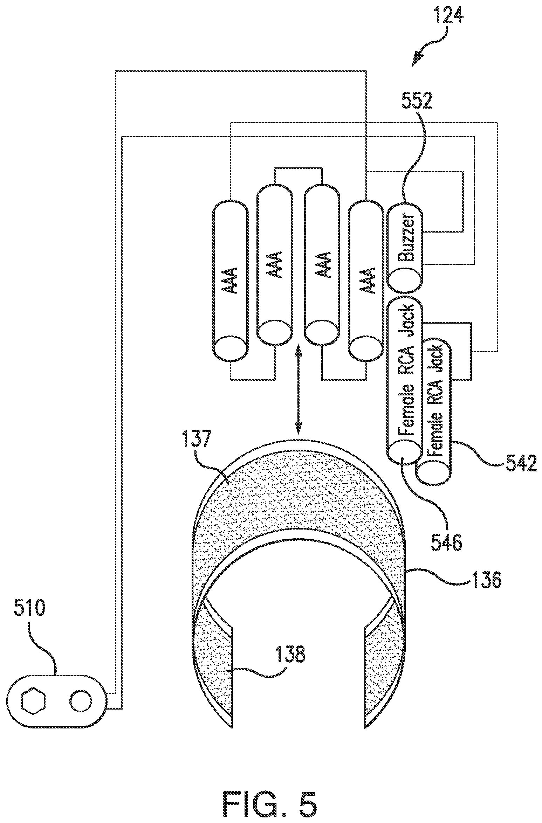

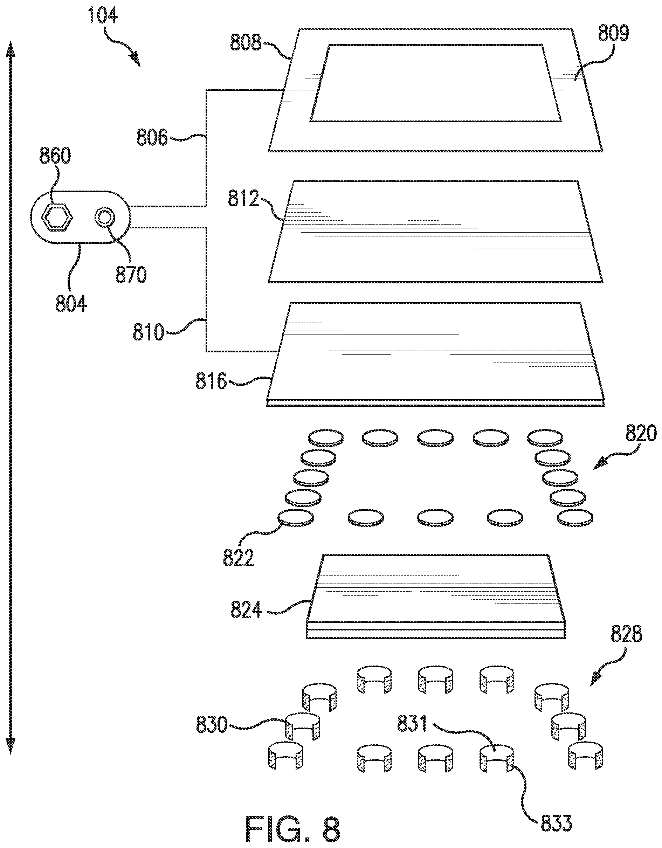

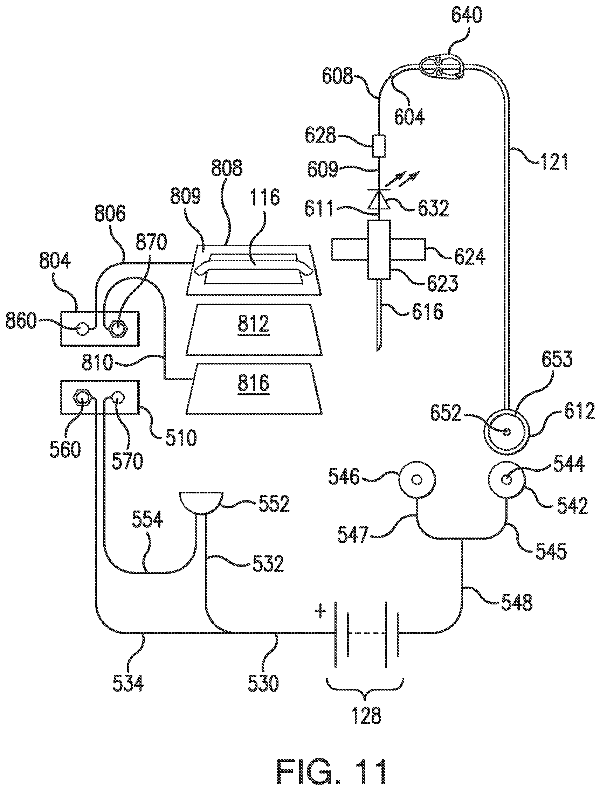

With reference now to the drawings, FIG. 1 is a schematic top view of a modular self-cannulation training system 100 according to an embodiment of the present invention. Modular self-cannulation training system 100 comprises a cannulation pad 104, an armband 108, an arm cradle 112, a simulated access 116, a set 120 of simulated cannulas 121, 122, a control unit 124, a battery 128, a simulated skin covering 132, and a wrist band 136. As can be seen from the top view shown, cannulation pad 104 includes a cannulation electrical circuit conductor 808 in the form of a frame, and an insulator layer 812 separating cannulation electrical circuit conductor 808 from underlying components. More details of cannulation pad 104 are shown in, and described in connection with, FIG. 8. A two-terminal electrical connector 804 can be used to electrically connect cannulation pad 104 to a two-terminal electrical connector 510 of control unit 124. A second two-terminal electrical connector 511 is provided to connect control unit 124 to battery 128. More details of control unit 124 are shown in, and described in connection with, FIG. 5 and FIG. 11.

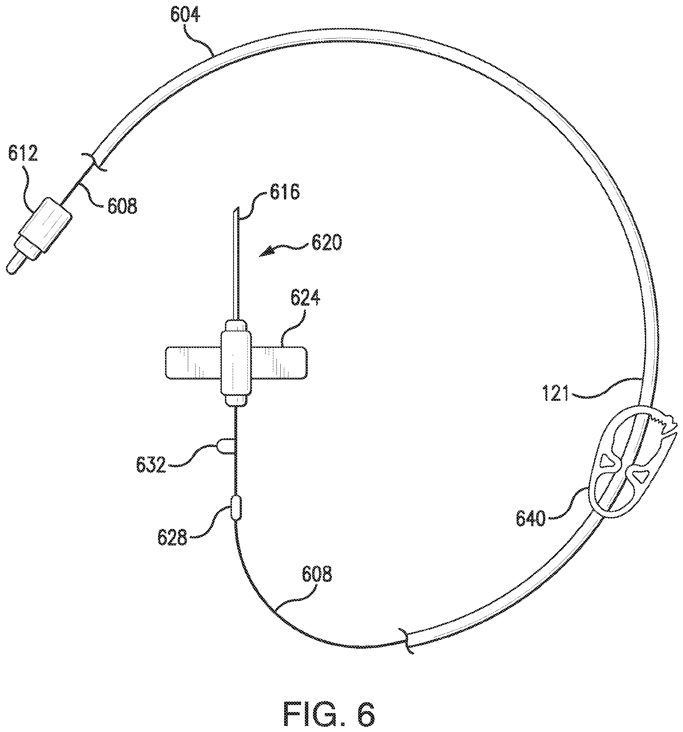

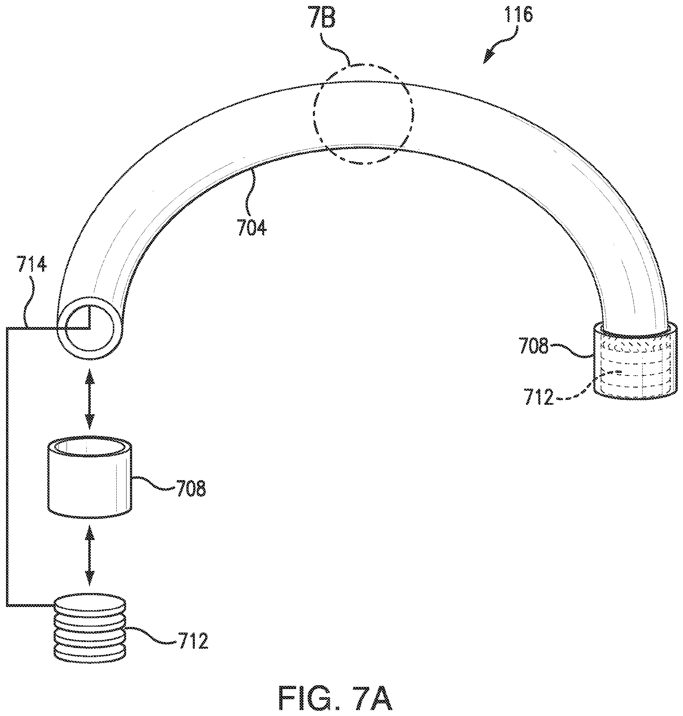

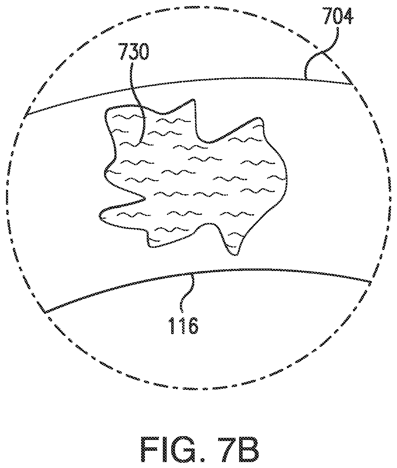

Simulated access 116 includes a stack of magnets 712 at each end thereof and left and right magnet housings 708 for respectively housing stacks of magnets 712. More details of simulated access 116 are shown in, and described in connection with, FIGS. 7A and 7B. Simulated cannulas 121 and 122 can comprise a simulated arterial cannula and a simulated venous cannula. Cannula needles at the tips of simulated cannulas 121 and 122, are protected by needle sheaths 123 and 125, respectively. Each of simulated cannulas 121 and 122 terminates at an RCA jack, for example, male RCA connector 612 having a connector post 652 and a cup-shaped metal conductor 653. Suction cups 150 are provided for attaching simulated cannulas 121 and 122 to a trainee's skin or to another surface and can be color-coded, for example, red for the simulated arterial cannula and blue for the simulated venous cannula. More details of simulated cannula 121 are shown in, and described in connection with, FIGS. 6 and 11.

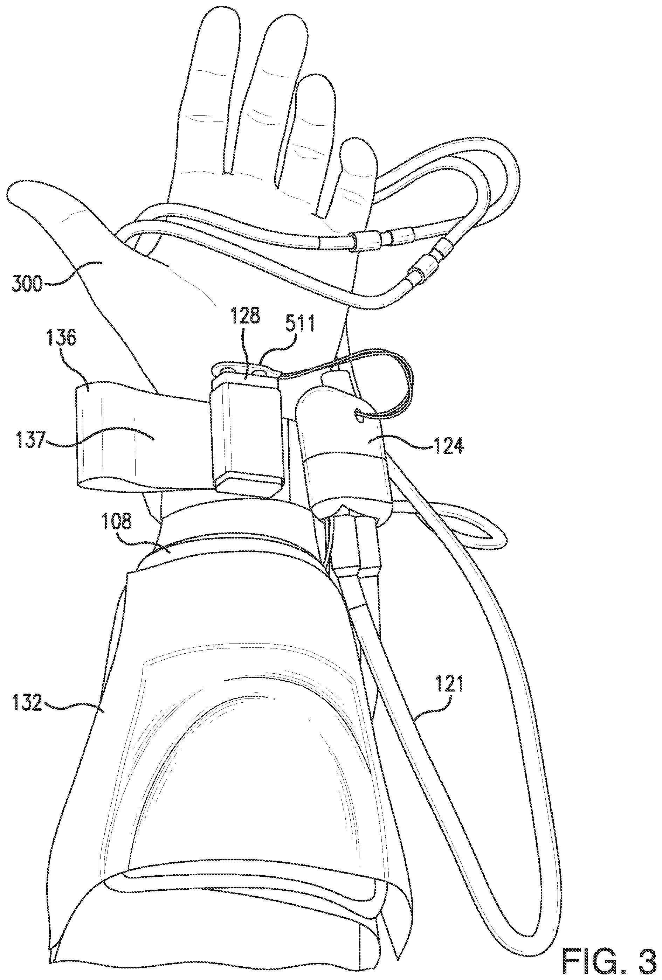

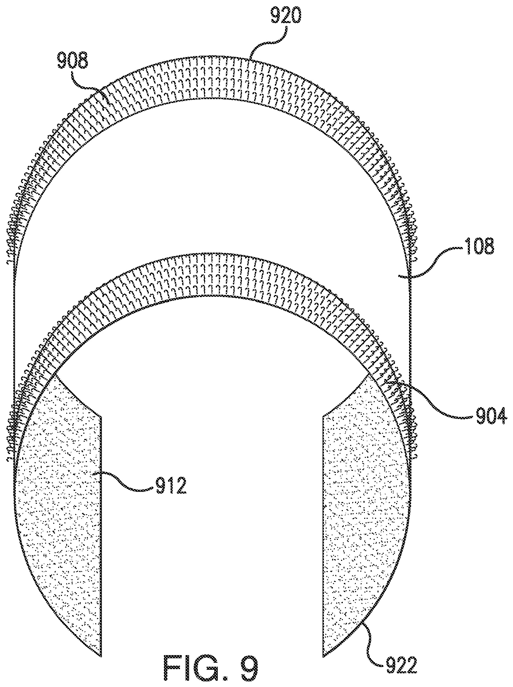

Armband 108 can comprise a sleeve configuration through which a trainee's arm can pass. Armband 108 can comprise a longitudinal opening or access so that armband 108 can be pushed onto an arm. One or more hook or loop or other fastener material patches 908 can be provided so that other modular components of the system can be fastened to and retained by armband 108. More details of armband 108 are shown in, and described in connection with, FIGS. 3 and 9.

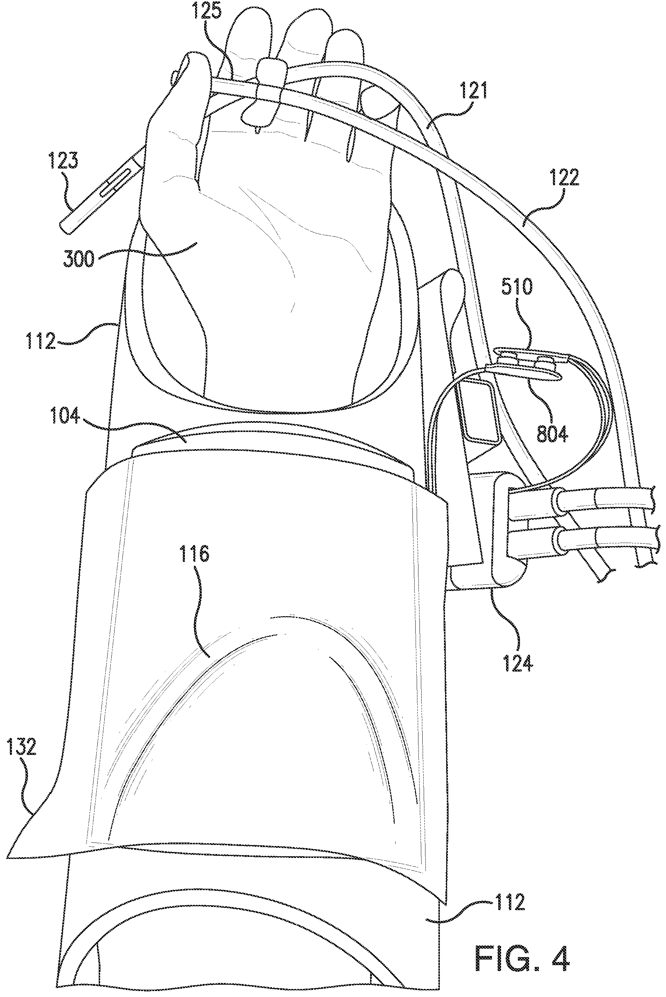

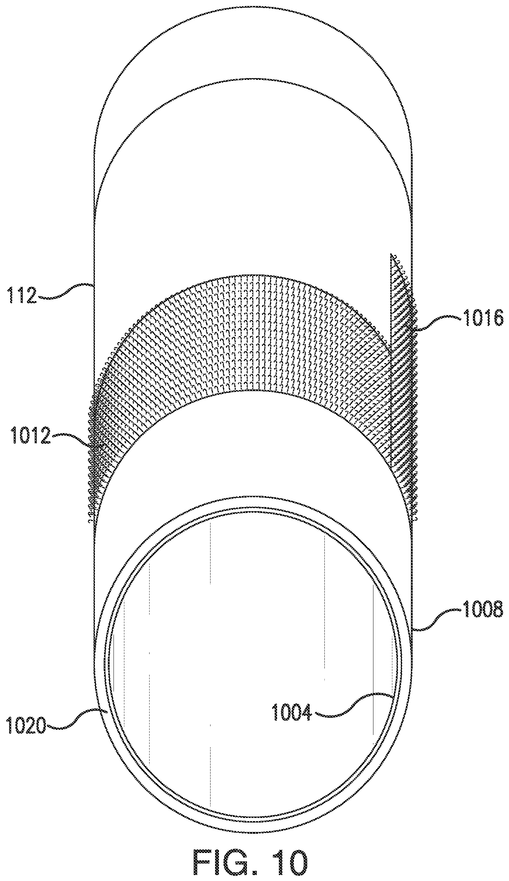

Arm cradle 112 can comprise a tube 1004 covered on its inside surface with a NEOPRENE^{®} or other elastomeric material 1020 intended to make contact with the skin of a trainee's arm. An outer surface of arm cradle 112 can also be coated or wrapped with a NEOPRENE^{®} or other elastomeric material. Outer surface 1008 can include a wide patch 1012 of hook fasteners configured to fasten and retain a cannulation pad such as cannulation pad 104 shown in FIG. 1. More details of arm cradle 112 are shown in, and described in connection with, FIG. 4 and 10.

Simulated skin covering 132 can be used to cover simulated access 116 and attach to armband 108 or arm cradle 112 so as to mimic an access or fistula of the trainee, under the surface of trainee's skin. Simulated skin covering 132 can comprise first and second fastener patches 133 and 135 that can be, for example, in the form of loop fastener patches adapted to fasten simulated skin covering 132 to armband 108 or arm cradle 112 and retain simulated skin covering thereon.

Wrist band 136 is provided with a fastener patch 136 that can be, for example, in the form of a loop fastener patch or a hook fastener patch adapted to fasten wrist band 136 around the wrist of a trainee or other user and configured to fasten and retain a control unit, battery, or both, to wrist band 136. Wrist band 136 can be used together with armband 108, in some embodiments.

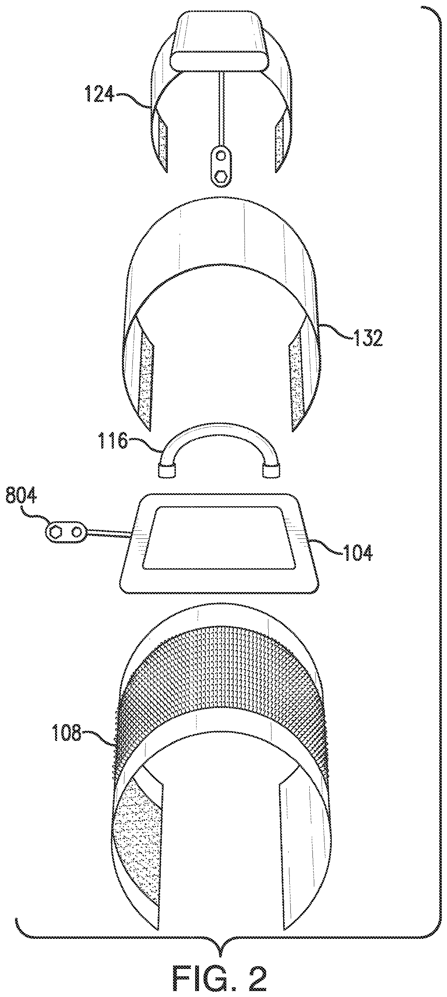

FIG. 2 is an exploded end view of a modular system according to an embodiment of the present invention and including armband 108 shown in FIG. 1, positioned to fasten and retain cannulation pad 104 shown in FIG. 1, onto which simulated access 116 can be magnetically retained, and onto which simulated skin covering 132 can be retained covering simulated access 116. Control unit 124 can be fastened to armband 108 or wrist band 136 can be used in conjunction with armband 108, to retain control unit 124.

FIG. 3 is a top view of the modular system shown in FIG. 2, assembled, on an arm of a trainee, and further including a power source in the form of battery 128, connected to two-terminal connector 511, and wherein control unit 124 is also connected to two simulated cannulas including cannula 121. As can be seen in FIG. 3, control unit 124 is fastened to wrist band 136, on fastener strip 137, and simulated skin covering 132 covers simulated access 116 so it appears as, or mimics, a bulging fistula on the arm of a trainee 300.

FIG. 4 is a top view of a modular system according to an embodiment of the present invention, assembled, on an arm of a trainee, and including arm cradle 112 shown in FIG. 1. In the embodiment shown in FIG. 4, arm cradle 112 is used. The arm of a trainee 300 is cradled in arm cradle 112. Cannulation pad 104 is fastened to a hook fastener patch on arm cradle 112 by a hook and loop fastener engagement. The bottom of cannulation pad 104 is fastened to arm cradle 112 via engagement of complementary hook and loop fasteners. other complementary fasteners and engagement devices can be used. Simulated access 116 can be magnetically secured to a cannulation electrical circuit conductor of cannulation pad 104. Simulated access 116 is covered by simulated skin covering 132 that is attached to arm cradle 112 via a hook and loop fastener engagement. At the training step shown in FIG. 4, trainee 300 is holding simulated cannulas 121 and 122 protective sheaths 123 and 125 remain covering and protecting the cannula needle tips of simulated cannulas 121 and 122, respectively. FIG. 4 also shows control unit 124 fastened to arm cradle 112 and retaining battery 128. As can be seen, control unit 124 is connected to cannulation pad 104 through the connection between connectors 510 and 804.

FIG. 5 is a schematic view showing exemplary components of control unit 124 shown in FIG. 1, together with wrist band 136 shown in FIG. 1. In the embodiment shown in FIG. 5, wrist band 136 and hook fastener patch 137 on the outer surface thereof. Inner surface 138 of wrist band 136 can have a loop fastener patch 138 or surface that can engage hook fastener patch 137 to secure wrist band 136 to a trainee's arm or wrist. In FIG. 5, control unit 124 is shown to include four triple a (AAA) batteries as a power source as opposed to the 9-volt battery source shown in FIGS. 1, 3, and 4. FIG. 5 also shows buzzer 552 and female RCA connectors 542 and 546 as part of the electric circuit terminating at two-terminal connector 510.

FIG. 6 is a top view of simulated cannula 121 shown in FIG. 1, with end portions of cannula sheath 604 peeled away to show conductive wire 608 running the length of simulated cannula 121. Male RCA connector 612 is provided at one end thereof, and needle 616 is provided at needle end 620 of simulated cannula 121. An LED 632 is provided teamed with a matched resistor 628. Wing 624 is provided with an adhesive backing such that, once the tip of needle 616 is properly cannulated into simulated access 116, it can be secured to the arm of a trainee, to the armband, or to the arm cradle, depending on the particular modular components with which cannula 121 is used.

FIG. 7A is an exploded side view of simulated access 116 shown in FIG. 1. Simulated access 116 includes a flexible access tube 704 that punctures like human vasculature and is filled with an electrically conductive slime 730. Simulated access also includes a stack of magnets 712, left and right magnet housings 708, and a conductive wire 714 electrically connecting stack of magnets 712 to conductive slime 730 in the interior of simulated access flexible access tube 704. Stack of magnets 712 can comprise any number of disk-shaped magnets although four are shown. Each magnet of stack of magnets 712 can comprise a permanent magnetic material. Ferromagnetic and ferrimagnetic materials can be used. Ferrimagnetic materials that include ferrites, magnetite, and lodestone can be used. Magnets comprising the elements iron, nickel, cobalt, alloys thereof, and alloys of rare-earth metals, can be used. Magnets comprising rare earth (lanthanoid) elements can be used, for example, magnets comprising samarium-cobalt or neodymium-iron-boron (NIB) materials. Composite magnet materials can be used, for example, ceramic or ferrite magnets made of a sintered composite of powdered iron oxide and barium/strontium carbonate ceramic, or the like, can be used. The magnets can be configured to magnetically hold tightly to cannulation electrical circuit conductor 808 as shown in FIG. 11, and cannulation electrical circuit conductor 808 can comprise a magnetically attractable material such as a ferromagnetic material or stainless steel.

FIG. 7B is an enlarged view of section 7B shown in FIG. 7A, and broken-away to show conductive slime or gel 730 in the interior of flexible access tube 704 of simulated access 116. Conductive slime or gel 730 can be part of an electrical circuit pathway that includes wire 714, stack of magnets 712, and cannulation electrical circuit conductor 808. Flexible access tube 704 can comprise a self-sealing or re-sealable material, for example, a GORE-TEX^{®} material, an elastomeric material, a rubber material, a septum material, a hydrophobic material, a combination thereof, or the like. GORE-TEX^{®} is a registered trademark of W. L. Gore and Associates.

FIG. 8 is an exploded view of cannulation pad 104 shown in FIG. 1, including a cannulation electrical circuit conductor 808, an infiltration electrical circuit conductor 816, and an insulator 812 separating cannulation electrical circuit conductor 808 and infiltration electrical circuit conductor 816. An array 820 of individual magnets 822 is provided for magnetically attracting and holding simulated access 116 shown in FIGS. 1, 7A, and 7B. A two-terminal electrical connector 804 is connected to cannulation pad 104 and can comprise, for example, a snap connector, T-type connector, or clip connector, as are used for connecting to 9-volt batteries. Two-terminal electrical connector 804 has connection posts 860 and 870 that are complementary to each other and complementary to connection posts 560 and 570, respectively, of two-terminal connector 510 shown in FIGS. 1, 4, 5, and 11. Connection posts 860 and 870 can include one post connector and one buckle connector configured to fit onto the post connector. The two connection posts of connector 804 are not, however, for respectively connecting to a positive and negative terminal of a battery or circuit, but rather, both are connected through electrical leads and through two-terminal connector 510, to the positive terminal of battery 128 once battery 128 is connected to battery connector 511.

Post connector 860 is electrically connected to cannulation electrical circuit conductor 808 through electrical lead 806 as also shown in and also described above in connection with FIG. 8. Buckle connector 870 is electrically connected to infiltration electrical circuit conductor 816 through electrical lead 810 as also shown in and also described in connection with FIG. 11. As such, and given the arrangement shown in FIG. 11, two-terminal electrical connector 804 is designed for connection to two-terminal electrical connector 510. Cannulation electrical circuit conductor 808 can comprise stainless steel or other metallic sheeting. Infiltration electrical circuit conductor 816 can comprise a double-layer of aluminum foil. Insulator 812 can comprise NEOPRENE^{®}.

Also shown in FIG. 8 are an array 828 of individual loop patches 830, such as VELCRO^{®} loop patches, to attach cannulation pad 104 to armband 108 (shown in FIGS. 1, 2, 3, and 9) at hook bands 904 and/or 908 on the outer surface of armband 108 as shown in FIG. 9. Each VELCRO^{®} patch 830 has an adhesive side 831 comprising, for example, a pressure sensitive adhesive, and a loop fastener side 833 enabling each VELCRO^{®} patch to removably attach to hook fasteners on armband 108 or arm cradle 112. In addition, a triple-layer of puncture resistant fabric 824 is provided adjacent to the bottom surface of cannulation pad 104, between array 820 and array 828, to prevent a simulated cannula from piercing the skin of a trainee in the event that a simulated cannula goes infiltrates cannulation pad 104, for example, if the distal tip of a simulated cannula pierces through simulated access 116, and penetrates through insulator 812.

Although VELCRO^{®} patches 830 are shown curled, upon assembly of cannulation pad 104 each VELCRO^{®} patch 830 is uncurled and attached to the underside of puncture resistant fabric 824 such that, for each VELCRO^{®} patch 830, adhesive side 831 contacts puncture resistant fabric 824 and loop fastener side 833 is exposed at the bottom of cannulation pad 104. Instead of, or in addition to, an adhesive, each VELCRO^{®} patch can be sewn to cannulation pad 104, heat-bonded to cannulation pad 104, snap-fastened to cannulation pad 104, or otherwise affixed to cannulation pad 104.

To assemble cannulation pad 104, the various layers shown in FIG. 8 are affixed together. The various layers can be glued together, otherwise adhered together, heat-sealed together, plastic-welded together, clamped together, stitched together, riveted together, laminated together, held together by a combination of such techniques, or otherwise manipulated to be brought together to form cannulation pad 104.

FIG. 9 is a top, end perspective view of armband 108 shown in FIG. 1. Armband 108 can comprise a flexible material, a rigid plastic material, a combination thereof, or the like. An elastic fabric material can be used. Armband 108 can be tubular, semi-tubular, open tubular, elastically deformable, inelastically deformable, a combination thereof, or the like. Armband 108 can have a narrow end 920 and a wide end 922 that is wider than narrow end 920. The inside surface 912 of armband 108 can comprise a loop fastener material, such as VELCRO^{®} loop fasteners. One or more patches of loop fastener material can be included on the inside surface 912 of armband 108. On the outside surface of armband 108 one or more strips or patches of hook fasteners can be provided, for example, VELCRO^{®} hook fasteners. In the embodiment shown a narrow strip 908 of hook fasteners is provided at narrow end 920, for example, a one-inch wide strip, and a wider strip 904 of hook fasteners is provided at wide end 922, for example, a four-inch wide strip. Narrow strip 908 of hook fasteners on the outside of armband 108 can be configured to fasten with loop fasteners of a control unit or control unit housing. Wide strip 904 of hook fasteners on the outside of armband 108 can be configured to fasten with an retain loop fasteners of a cannulation pad, for example, cannulation pad 104 shown and described herein. Array 828 of loop fasteners 830, shown in FIG. 8, can fasten to wide strip 904 of hook fasteners to hold cannulation pad 104 in place on armband 108. Armband 108 can be used in conjunction with wrist band 136, shown in FIGS. 1 and 3, that can also have a patch or strip 137 of hook or loop fasteners to fasten control unit 124 and battery 128 as shown in FIG. 3.

FIG. 10 is a top, end perspective view of arm cradle 112 shown in FIG. 1. Arm cradle 112 comprises a rigid polyvinylchloride tube 1004 wrapped or covered on its inside surface with a NEOPRENE^{®} material 1020 intended to make contact with the skin of a trainee's arm. An outer surface 1008 of arm cradle 112 can also be coated or wrapped with a NEOPRENE^{®} or other elastomeric material. Outer surface 1008 can include a wide patch 1012 of hook fasteners configured to fasten and retain a cannulation pad such as cannulation pad 104 shown in FIG. 1 and having an array 828 of loop fastener patches 830 as shown in FIG. 8. Outer surface 1008 can include a narrow strip 1016 of hook fasteners configured to fasten loop fasteners on a band of a control unit such as control unit 124 shown in FIG. 1. Arm cradle 112 can have tapered cut-outs at opposite ends, as shown in FIG. 1, or can comprise a non-tapered continuous tubular configuration as shown in FIG. 10.

FIG. 11 is a schematic view of an electrical system including modular electrical components and circuitry according to various embodiments of the present invention. As shown in FIG. 11, simulated cannula 121 comprises an insulative sheath 604 surrounding a conductive wire 608 as also shown and described in connection with FIG. 6. One end of simulated cannula 121 has a male RCA connector 612 including a conductive post 652 in the center thereof. Conductive post 652 is in electrical communication with conductive wire 608. Surrounding conductive post 652 of male RCA connector 612 is an outer, cup-shaped metal conductor 653 that is electrically insulated from conductive post 652. Outer metal conductor 653 is not connected to conductive wire 608 and is simply used as a connection tool to center conductive post 652 and fix male RCA connector 612 to a female RCA connector 542 of control unit 124. Greater details of an exemplary control unit 124 are shown in and described in connection with FIG. 5. Although RCA connections are typically as connectors for co-axial, shielded wires, in the embodiment shown in FIG. 11, the RCA connectors are simply used for a single lead, specifically, only as a connector for conductive wire 608.

Male RCA connector 612 fits onto female RCA connector 542 such that post 652 fits snugly inside recess 544 of female RCA connector 542. Like male RCA connector 612, female RCA connector is used as a single lead, not co-axial, connector, enabling an electrical connection between conductive wire 608, an electrical lead 545, an electrical lead 548, and battery 128. Similarly, a male RCA connector at the end of a second simulated cannula (not shown in FIG. 11) can connect to female RCA connector 546 and also be made in electrical connection with battery 128 through an electrical lead 547 that also contacts, for example, merges into, electrical lead 548.

To show conductive wire 608, FIG. 11 shows a portion of insulative sheath 604 stripped away from conductive wire 608 at an end of simulated cannula 121 opposite the end having male RCA connector 612. As can be seen, conductive wire 608 connects to a resistor 628. Resistor 628 is electrically connected to an LED 632 through an electrical lead 609. LED 632 is in-turn electrically connected to a distal, conductive, simulated cannula needle 616, through an electrical lead 611. Conductive, simulated needle 616 can be solid, hollow, dual lumen, or the like. Conductive, simulated needle 616 can be protected by a needle sheath 123 or 125 as shown in FIGS. 1 and 4, until ready for use. Electrical leads 609 and 611 can be wires, can be of the same gauge or of a different gauge or gauges than electrical wire 608, and can also be protected by an insulative sheath although not shown in FIG. 11. As such, an electrical pathway is formed from post 652 of male RCA connector (jack) 612 all the way to the distal tip of needle 616.

Resistor 628 has a resistance that is matched to LED 632 to prevent burn-out of LED 632 and to provide long-life and consistent operation of LED 632. LED 632 can be a red LED, for example, to mimic the flash of blood that would result from proper cannulation of a real artery with a real cannula at the first moment of fluid connection. Simulated cannula 121 can be colored are partially colored red, for example, with a solid, an opaque, or a semi-transparent red coloring, to simulate an arterial cannula. Simulated cannula 121 can be colored blue, for example, with a solid, an opaque, or semi-transparent blue coloring, to simulate a venous cannula. The modular system can be provided with both a red simulated cannula and a blue simulated cannula. In an example, simulated cannula 121 shown in FIG. 1 can be of a red color or shading whereas simulated cannula 122 shown in FIG. 1 can be of a blue color or shading.

Adjacent to the tip of conductive cannula needle 616, a needle base 623 is provided and can be made, for example, of plastic. Wings 624 can extend from needle base 623 and can have an adhesive underside, for example, including a pressure sensitive adhesive that is protected by a removable liner. Electrical lead 611 can pass through needle base 623 and contact the distal tip of conductive needle 616 such that conductive needle tip is in electrical contact with LED 632.

While one terminal of battery 128 is in electrical contact with electrical lead 548, leading to female RCA connectors 542 and 546, the other terminal of battery 128 is in electrical contact with an electrical lead 530 that branches into a first electrical lead 532 and a second electrical lead 534. First electrical lead 532 is in electrical contact with a buzzer 552 and buzzer 552 is also in electrical contact with a third electrical lead 554. Electrical leads 534 and 554 terminate at connection posts 560 and 570, respectively, of a two-terminal electrical connector 510. Two-terminal electrical connector 510 can be, for example, a snap connector, T-type connector, or clip connector, as are used for connecting to 9-volt batteries. Connection posts 560 and 570 can be complementary to each other, with one being a post and the other being a buckle configured to fit onto the post. The two connection posts of connector 510 are not, however, for respectively connecting to a positive and negative terminal of a battery, but rather, both are connected through electrical leads to the positive terminal of battery 128. The flat, non-bulky nature of such connectors enable such connectors to be well-suited for the modular systems described herein.

Two-terminal electrical connector 510 is configured to connect with a second two-terminal electrical connector 804. Two-terminal electrical connector 804 can also be, for example, a snap connector, T-type connector, or clip connector, as are used for connecting to 9-volt batteries. Two-terminal electrical connector 804 has connection posts 860 and 870 that are complementary to each other and complementary to connection posts 560 and 570, respectively, of two-terminal connector 510. Connection posts 860 and 870 can include one post connector and one buckle connector configured to fit onto the post connector. The two connection posts of connector 804 are not, however, for respectively connecting to a positive and negative terminal of a battery or circuit, but rather, both are connected through electrical leads and through two-terminal connector 510, to the positive terminal of battery 128.

Post connector 860 is electrically connected to cannulation electrical circuit conductor 808 through electrical lead 806 as also shown in and also described above in connection with FIG. 8. Buckle connector 870 is electrically connected to infiltration electrical circuit conductor 816 through electrical lead 810 as also shown in and also described above in connection with FIG. 8. As such, and given the arrangement shown in FIG. 11, when two-terminal electrical connector 804 is connected to two-terminal electrical connector 510, each of cannulation electrical circuit conductor 808 and infiltration electrical circuit conductor 816 are in electrical contact with the positive terminal of battery 128. As described in connection with FIG. 8, cannulation electrical circuit conductor 808 and infiltration electrical circuit conductor 816 are electrically insulated from one another by insulator 812. As can be seen, only the electrical pathway from infiltration electrical circuit conductor 816 to the positive terminal of battery 128 passes through and would activate buzzer 552, whereas the electrical pathway through cannulation electrical circuit conductor 808 to the positive terminal of battery 128 would bypass and thus not activate buzzer 552. Such electrical pathways would need, however, to be completed or closed, for example, by connecting simulated cannula 121 to female RCA connector 542 or 546 and electrically contacting needle 616 with either or both of cannulation electrical circuit conductor 808 or infiltration electrical circuit conductor 816.

According to training methods provided herein, cannulation and self-cannulation can be practiced by cannulating simulated access 116 with needle 616. Layers 808, 812, and 816 can be assembled together with insulator 812 electrically separating cannulation electrical circuit conductor 808 from infiltration electrical circuit conductor 816, to form a cannulation pad. Insulator layer 812 can comprise a polymer, an elastomer, NEOPRENE^{®}, or the like. An exemplary cannulation pad that can be used or result is shown as pad 104 in FIG. 1. Related useful and optional components, for example, those shown in and described in connection with FIG. 8, can also be incorporated into the cannulation pad.

Simulated access 116 can be electrically attached at one or both ends to cannulation electrical circuit conductor 808, for example, to a top surface 809 of cannulation electrical circuit conductor 808 as shown in FIG. 11. Simulated cannula 121 can be connected at jack 612 to jack 542, connectors 510 and 804 can be connected together, and needle 616 can be used to cannulate simulated access 116. Simulated access 116 can comprise a tube filled with a conductive gel and having magnetic ends magnetically attached to and in electrical communication with cannulation electrical circuit conductor 808. Cannulation electrical circuit conductor 808 can comprise a metal frame, for example, a stainless steel or other metallic frame. Infiltration electrical circuit conductor can comprise a stainless steel or other metallic plate or frame, for example, a double-layer of aluminum foil.

Upon properly cannulating simulated access 116, a cannulation electrical circuit is formed such that electrical current runs through the entire cannulation electrical circuit including through LED 632. As a result, LED 632 lights-up, signaling a proper cannulation. In the event that simulated access 116 is not properly cannulated by needle 616, for example, via an overshoot through or by missing simulated access 116, and needle 616 contacts infiltration electrical circuit conductor 816, buzzer 552 is activated signaling an improper cannulation, an infiltration, or both. Buzzer 552 can be activated whether or not LED 632 is also activated.

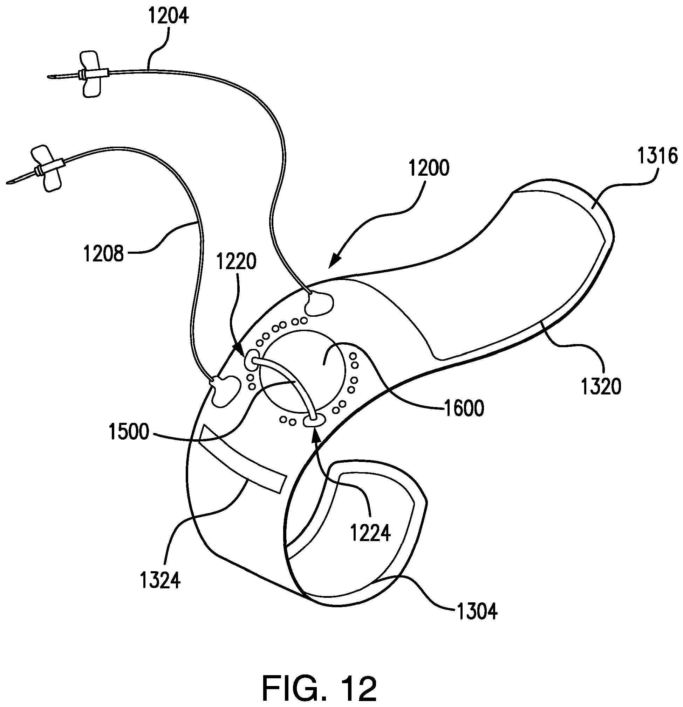

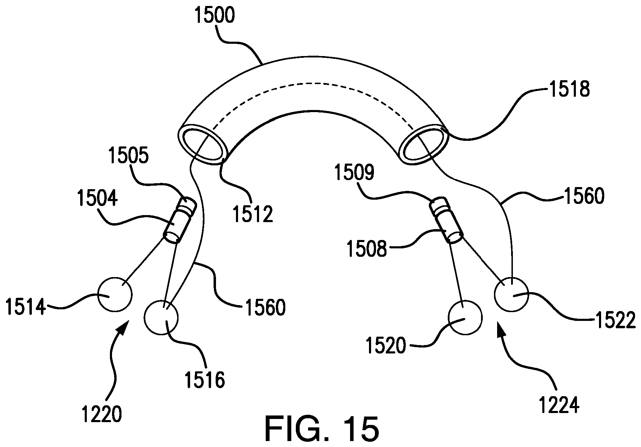

FIG. 12 is a perspective view of a modular system 1200 according to another embodiment of the present invention. Modular system 1200 includes two simulated cannulas 1204, 1208 extending from a control unit (not shown) of the system. A simulated access 1500 extends across a cannulation pad 1600. Simulated access 1500 is connected at a first end (1512 in FIG. 15) by a first pair 1220 of electrically-conductive magnetic connectors, on one side of cannulation pad 1600. Simulated access 1500 is connected at a second end by a second pair 1224 of electrically-conductive magnetic connectors, on an opposite side of cannulation pad 1600. More details about simulated access 1500 are provided in connection with the description of FIG. 15, herein.

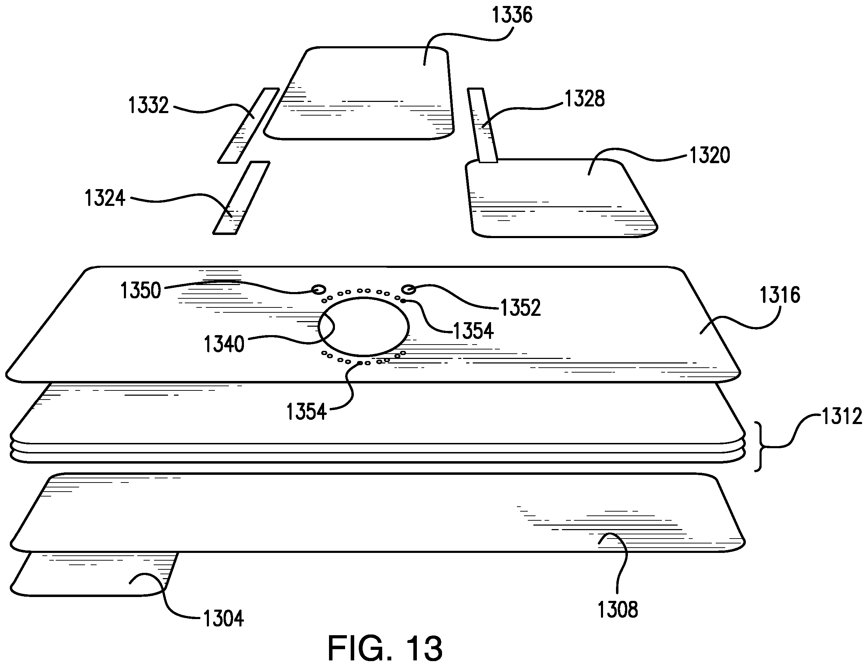

FIG. 13 is an exploded, top, front perspective view of the fabric layers, hook fastener layers, loop fastener layers, elastomeric layers, puncture-resistant layers, and other layers that, together with a separate electrical system, make-up the modular system shown in FIG. 12. The layers include a bottom, downward-facing loop fastener patch 1304, a bottom nylon layer 1308, and a three-layer stack 1312 comprising three layers of puncture-resistant fabric such as ANSI/ISEA 105 standard-compliant, needle-resistant material, for example, SUPERFABRIC^{®} material available from Higher Dimensions Materials, Inc. (HDM) of Oakdale, Minnesota, and available from HexArmor of Grand Rapids, Michigan.

FIG. 13 also shows a punch-out layer 1316 comprising a thin layer of material, for example, having a thickness of from 1.0 to 4.0 mm, provided with a punch-out or cut-out 1340 arranged and sized for providing access to a cannulation pad as described herein. Alternatively, cut-out 1340 can be omitted in which case infiltration would require piercing the material of punch-out layer 1316, which can be, for example, a 1.5 mm-thick layer of NEOPRENE^{®} material. The various layers shown in FIG. 13 can be secured together by sewing, stitching, gluing, welding, adhesives, rivets, staples, laces, combinations thereof, and the like.

Punch-out layer 1316 can have a length of from 300 mm (11.8 inches) to 600 mm (23.6 inches), from 400 mm (15.7 inches) to 500 mm (19.7 inches), or, for example, of 450 mm (17.7 inches). Punch-out layer 1316 can have a width of from 100 mm (3.9 inches) to 200 mm (7.9 inches), from 120 mm (4.7 inches) to 160 mm (6.3 inches), or, for example, of 140 mm (5.5 inches). Each of bottom nylon layer 1308 and three-layer stack 1312 can independently have the same or similar dimensions as those of punch-out layer 1316.

Cannulation pad cover 1336 can have can have a length of from 100 mm (3.9 inches) to 200 mm (7.9 inches), from 125 mm (4.9 inches) to 175 mm (6.9 inches), or, for example, of 150 mm (5.9 inches). Cannulation pad cover 1336 can have a width of from 100 mm (3.9 inches) to 200 mm (7.9 inches), from 120 mm (4.7 inches) to 160 mm (6.3 inches), or, for example, of 140 mm (5.5 inches). Each of hook fastener patch 1320 and loop fastener patch 1304 can independently have the same or similar dimensions as those of cannulation pad cover 1336.

Each of loop fastener strips 1328 and 1332, and hook fastener patch 1324, can independently have a width of from 15 mm (0.6 inch) to 50 mm (2.0 inches), of from 20 mm (0.8 inch) to 30 mm (1.2 inches), or, for example, of 25.4 mm (one inch). Each of loop fastener strips 1328 and 1332, and hook fastener patch 1324, can independently have a length of from 100 mm (3.9 inches) to 200 mm (7.9 inches), from 120 mm (4.7 inches) to 160 mm (6.3 inches), or, for example, of 140 mm (5.5 inches).

Punch-outs or cut-outs 1350 and 1352 are also provided through punch-out layer 1316 to provide access for the connector ends of two simulated cannulas as described herein. The connector ends of simulated cannulas can pass through cut-outs 1350 and 1352 to enable connections with electrical circuitry underneath punch-out layer 1316. Through-holes 1354 for wires are also provided through punch-out layer 1316 to enable electrical connections between magnetic electrical connectors on the top of punch-out layer 1316 and electrical circuitry underneath punch-out layer 1316.

Two hook fastener patches 1320 and 1324 are secured to punch-out layer 1316 and each has exposed hook fasteners once the patches are secured to punch-out layer 1316. Hook fastener patches 1320 and 1324 are configured to fasten to two respective loop fastener strips 1328 and 1332 that are secured to the underside of a cannulation pad cover 1336. Loop fastener strips 1328 and 1332, once secured to the underside of a cannulation pad cover 1336, have exposed loop fasteners. The hook fasteners and the loop fasteners can be used together to secure the assembled training system onto an arm, for example, onto a dummy's arm, onto a trainee's arm, or onto a volunteer's arm.

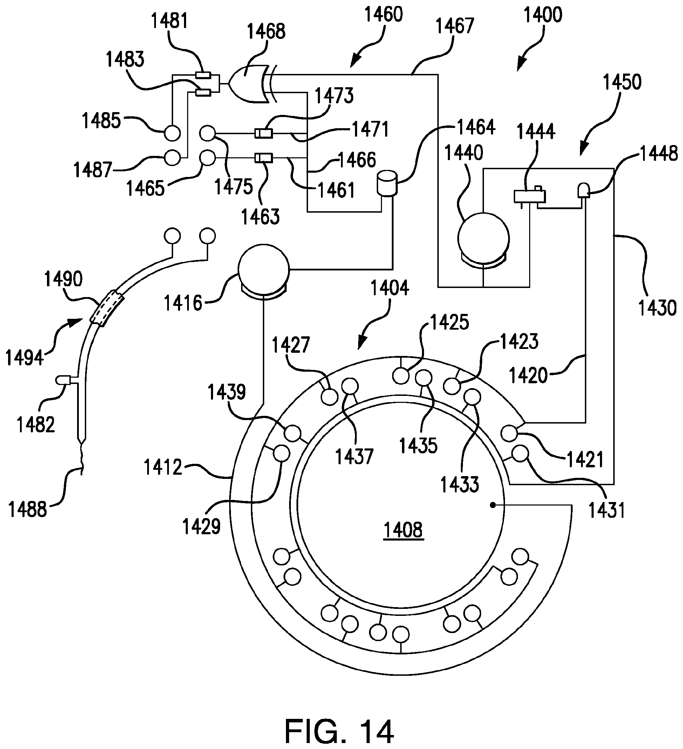

FIG. 14 is a schematic view of an electrical system 1400 including modular electrical components and circuitry, according to various embodiments of the present invention, and that can be used in the modular system shown in FIG. 12. Electrical system 1400 comprises cannulation pad contacts 1404. Cannulation pad contacts 1404 include an electrically-conductive mesh patch 1408 connected, via wiring 1412, to a battery 1416. Battery 1416 can be, for example, a USB port-rechargeable lithium battery or a coin-sized battery such as a CR 2023 battery. Cannulation pad contacts 1404 also comprise electrically-conductive magnetic contacts 1421, 1423, 1425, 1427, 1429, and others, serially connected to a first pad lead 1420. Cannulation pad contacts 1404 also comprise electrically-conductive magnetic contacts 1431, 1433, 1435, 1437, 1439, and others, serially connected to a second pad lead 1430. A motor-powering circuit 1450 is provided that includes cannulation pad contacts 1404, first pad lead 1420, second pad lead 1430, a second battery 1440, a switch 1444, and an indicator light 1448 such as a blue LED to indicate when electricity is switched on through motor-powering circuit 1450. When switched on, and a simulated access is properly connected to the cannulation pad, motor-powering circuit 1450 sends current through both serially-connected motors of a simulated access, powering the motors to vibrate and provide a haptic response at the simulated access. An exemplary simulated access 1500, that can be used with or be a part of circuit 1450, is shown in FIG. 15.

As shown in FIG. 14, electrical system 1400 also comprises a cannulation verification circuit 1460 for providing confirmation of a successful cannulation, alarm notification in the event of an infiltration, or both. Cannulation verification circuit 1460 can be configured to activate a success indicator in the event of a successful cannulation. Activating the success indicator can comprise the activation of a red LED, of a pulsing LED, of a combination thereof, or the like. A pulsing red LED to mimic a blood pulse in a patient, is provided with appropriate circuitry.

Cannulation verification circuit 1460 can comprise a buzzer 1464, for example a 5-volt buzzer. In combination, a 6-volt battery can be provided as battery 1416. A lead 1466 connects buzzer 1464 to an Ex-OR gate 1468 and/or to other circuitry to configure a desired result. Stemming from lead 1466 are two branches 1461, 1471, respectively, with each also connected to a respective diode 1463, 1473 that in-turn connects to a respective connector 1465, 1475. The circuitry can be configured such that, if the buzzer goes off due to an infiltration, then the LED indicator light provided along the simulated cannula can be made to turn off.

Also connected to Ex-OR gate 1468 is a lead 1467 stemming from motor-powering circuit 1450 and completing a circuit through a simulated cannula upon proper cannulation into a simulated access. An indicator, for example, an indicator light such as an LED 1482, or more specifically, a red LED, can be configured to light-up upon a proper cannulation of a simulated access, in the event that a simulated cannula 1494, including such an LED 1482, is connected at connectors 1484 and 1486 to respective connectors 1487 and 1465 of cannulation verification circuit 1460. Although not shown, circuitry can also be provided to pulse LED 1482, for example, to further mimic a blood pulse through the simulated cannula. Similarly, a second simulated cannula can be connected to connectors 1475, 1485 to similarly test whether the second simulated cannula is properly cannulated into the simulated access or whether an infiltration has taken place. A resistor 1481 is provided between connector 1485 and Ex-OR gate 1468 and is matched with LED 1482 to prevent burn-out of LED 1482 of simulated cannula 1494. Similarly, a resistor 1483 is provided between connector 1487 and Ex-OR gate 1468 and is also matched with LED 1482, or with an LED in a simulated cannula configured to connect to connector 1487, to prevent burn-out of the LED.

FIG. 15 is an exploded, front, perspective view of simulated access 1500 shown in FIG. 12. At the ends of simulated access 1500, two pairs of magnetic electrical connectors are provided. More specifically, at a first end 1512 of simulated access 1500, a first pair of magnetic electrical connectors 1514, 1516 is provided. At a second end 1518 of simulated access 1500 a second pair of magnetic electrical connectors 1520, 1522 is provided.

As shown in FIG. 15, a simulated access 1500 is provided with two motors 1504, 1508, for example, mini, coreless motors. Each motor can comprise a coreless motor, a mini-motor, an asymmetric-weight motor, an impeller, a cell-phone vibrator motor, a combination thereof, or the like. Motors 1504 and 1508 can be connected to each other, in series, through a wired connection, through the conductive slime in the simulated access, or through a combination thereof. In the embodiment shown in FIG. 15, motors 1504 and 1508 are connected to each other in series by both a through wire 1560 and conductive slime filled in the simulated access. Motors 1504 and 1508 are configured to spin respective asymmetric weights 1505, 1509 such that vibratory motion is caused at each end of the simulated access. The vibratory motion provides a haptic response to the cannulation training and more effectively mimics a real cannulation experience. Coupled with an indicator such as a pulsing red LED to indicate a successful simulated cannulation, a more realistic, haptic, training experience can be realized.

Although magnetic electrical connectors 1516 and 1522 are shown in FIG. 15 as being in electrical contact with each other via through wire 1560, through wire 1560 can be omitted such that magnetic electrical connectors 1516 and 1522 electrically connect to one another through only the conductive slime inside simulated access 1500. The inclusion of through wire 1560, however, provides a pathway for double-dipping and ensures a pathway of very low resistance between magnetic electrical connectors 1516 and 1522, independent of the conductive slime provided in simulated access 1500.

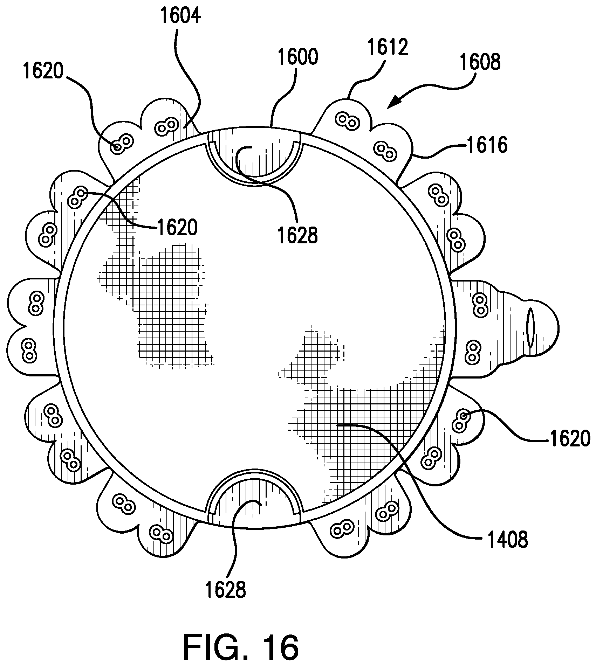

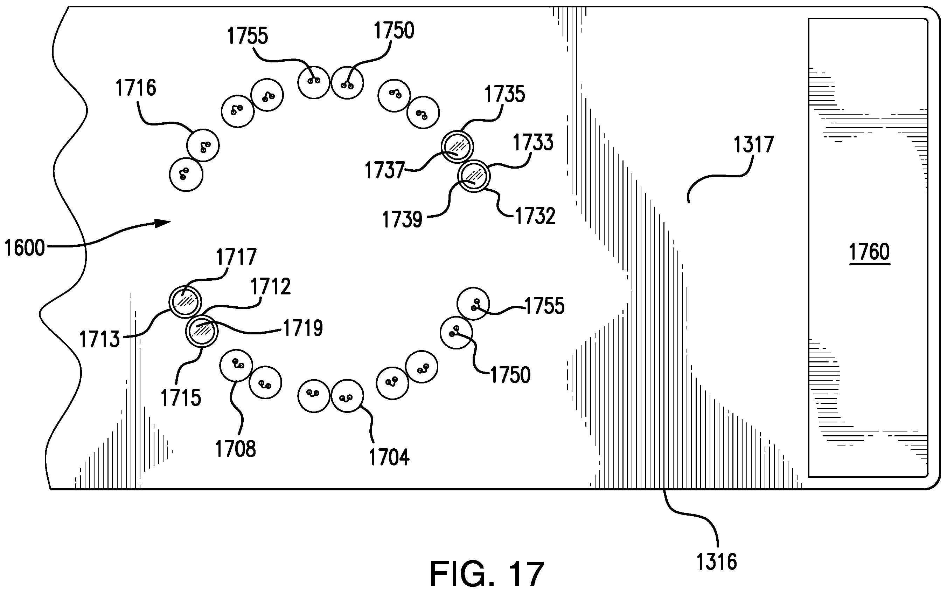

FIG. 16 is a bottom view of cannulation pad 1600 that is also shown in FIG. 12. Cannulation pad 1600 comprises a 3-D printed layer 1604 of electrically insulative material that defines a plurality of pairs of tabs, for example, pair 1608 consists of tab 1612 and tab 1616. Tabs 1612 and 1616, along with the other tabs, are used for mounting on the top of cannulation pad 1600 respective magnetic connector holders each of which is configured to hold a pair of magnets as described herein with respect to FIG. 17. Tabs 1612, 1616, and the others, comprise tab through-holes 1620 for threading therethrough an electrically conductive wire that can be used for securing the magnet holders on the top of cannulation pad 1600. Wires threaded through tab through-holes 1620 can also be electrically connected to electrically-conductive magnetic connectors held in the magnet holders, for example, by soldering or by using a conductive epoxy adhesive.

Cannulation pad 1600 also comprises electrically-conductive mesh patch 1408 that is described in more detail above in connection with the circuitry shown in FIG. 14. Two inwardly extending tabs 1628 are also formed as part of 3-D printed layer 1604 and can be sewn to electrically-conductive mesh patch 1408 to maintain the mesh patch in place. 3-D printed layer 1604 can be ring-shaped, that is, open in the middle so as not to obstruct access to electrically-conductive mesh patch 1408, from above. Alternatively, 3-D printed layer 1604 can be circular in shape, not open in the middle, in which case infiltration would require piercing the material of 3-D printed layer 1604 before making contact with electrically-conductive mesh patch 1408. An electrical lead or connector tab (not shown) can be provided, electrically attached to electrically-conductive mesh patch 1408, to facilitate the connection and disconnection of a circuit wire to and from electrically-conductive mesh patch 1408.

FIG. 17 is a top, perspective view of cannulation pad 1600 shown in FIG. 16 and showing respective connector pair holders 1704, 1708, 1712, 1716, and others, each configured for holding a pair of magnetic connectors. For example, pair holder 1712 comprises a first cup 1713 and a second cup 1715 configured to snugly hold magnetic connectors 1717 and 1719, respectively. As can be seen, the connector pair holders are mounted on the top surface 1317 of punch-out layer 1316. More details about punch-out layer 1316 are described in connection with FIG. 13 herein. For the sake of simplicity, only two pairs of magnetic connectors are shown in FIG. 17, in only two of the pair holders, namely, magnetic connectors 1717 and 1719 in cups 1713 and 1715, respectively, make-up one pair of magnetic connectors, and magnetic connectors 1737 and 1739 in cups 1733 and 1735, respectively, make-up a second pair of magnetic connectors. A simulated access such as simulated access 1500 shown in FIG. 15 can be connected at its two ends to the respective pairs of magnetic connectors such that the simulated access can extend across cannulation pad 1600 and be well-positioned to detect a proper cannulation of the simulated access. Also, with such positioning of the simulated access, cannulation pad 1600 is well-positioned to detect an infiltration of a simulated canula needle in the event that the simulated access is not properly canulated.

As shown in FIG. 17, besides pair holders 1712 and 1732, the other pair holders, for example, pair holders 1704, 1708, 1716, do not yet have magnetic connectors fixed therein but instead show a conductive trace or wire 1750 or 1755 in the bottom of the cups ready to make contact with and be soldered or glued to respective magnetic connectors. Wires 1750 and 1755 can be connected to an electronics circuit primarily housed in an electronics unit 1760. In an example, the circuit shown in FIG. 14 can be used with cannulation pad 1600 of FIGS. 16 and 17, and wire 1755, threaded through the bottom of every other cup, can be connected to a first lead such as lead 1420 shown in FIG. 14. Wire 1750 can pass through the bottoms of the remaining cups, on the other hand, and be connected to a second lead such as lead 1430 shown in FIG. 14.

For each pair of magnetic connectors of cannulation pad 1600, one of the magnets can be oriented with it north magnetic pole facing outwardly whereas the other magnet of the pair can be oriented with its south magnetic pole facing outwardly. A simulated access, such as simulated access 1500 shown in FIG. 15, can thus be provided with its first pair of magnetic electrical connectors 1514, 1516 mounted in a side-by-side arrangement, for example, in an end cap having side-by-side cup holders such that one of the magnets (e.g., 1514) can be oriented with it north magnetic pole facing outwardly whereas the other magnet of the pair (e.g., 1516) can be oriented with its south magnetic pole facing outwardly. For the opposite end of simulated access 1500, the two outwardly facing magnet polarities can be switched. As such, magnet connector 1516 of simulated access 1500 contacts one of the leads 1420 or 1430 of motor-powering circuit 1450 shown in FIG. 14, magnet connector 1522 of simulated access 1500 contacts the other of the leads 1420 or 1430 of motor-powering circuit 1450 shown in FIG. 14, and through wire 1560 of simulated access 1500 bridges leads 1420 and 1430. By bridging leads 1420 and 1430, motor-powering circuit 1450 can be closed, enabling motors 1504 and 1508 of simulated access 1500 to be powered when switch 1444 is turned on.

With such an arrangement of magnet pairs along the periphery of cannulation pad 1600, and such an arrangement of magnets at the ends of simulated access 1500, simulated access 1500 can only be connected in a proper fashion to cannulation pad 1600. A proper connection is useful in setting up proper electrical circuitry and powering the motors in the simulated access. Once fully assembled, ten pairs of electrically-conductive magnets are provided. The first magnet of each respective pair can be serially connected to the other first magnets of the pairs. The second magnet of each respective pair can be serially connected to the other second magnets of the pairs. As such, the pairs of magnets can be arranged as shown in FIG. 14.

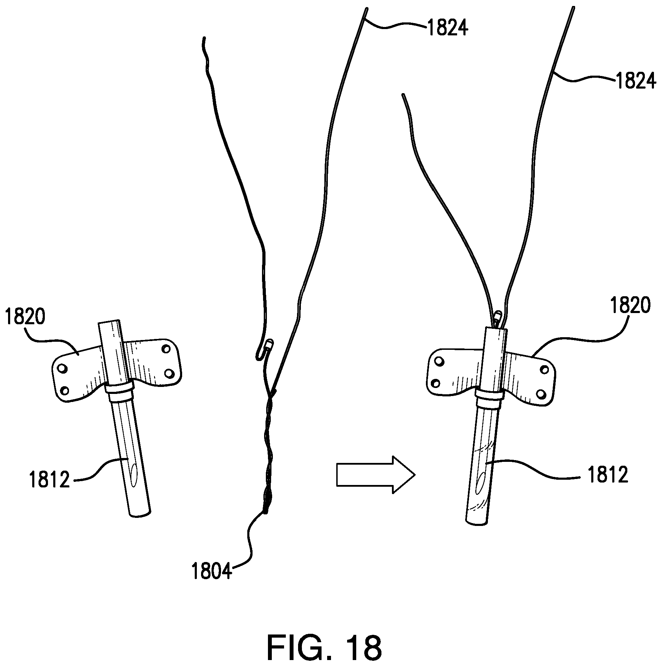

FIG. 18 is a top view of the wound needle end 1804 of a simulated cannula dual wire 1808 that can be used in a simulated canula and with the modular system shown in FIGS. 12-16. FIG. 18 shows wound needle end 1804 before and after insertion into a separately provided electrically-conductive hollow cannula needle tip 1812, which is shown in FIG. 18 protected by a cap 1816. A user, trainee, or prescriber can order and/or use a cannula needle tip 1812 of his or her own choosing and the simulated cannula does not need to be shipped or delivered with a cannula needle tip. The configuration enables a user to use any off-the-shelf needle or needle set, with the simulated cannula dual wire device and the simulated cannula training system. The user, trainee, or prescriber can insert wound needle end 1804 of dual wire 1808 into the hollow cannula needle tip 1812 and friction alone can be used to maintain wound needle end 1804 inside and in electrical contact with hollow cannula needle tip 1812.

As can be seen in FIG. 18, electrically-conductive hollow cannula needle tip 1812 can be capped and protected by cap 1816 right up until the start of cannulation training with the modular system. Electrically-conductive hollow cannula needle tip 1812 can be connected to a set of wings 1820 that facilitate handling the hollow cannula needle tip, uncapping and capping the hollow cannula needle tip, and securing the hollow cannula needle tip. Securing can involve, for example, taping the needle tip to the arm of a user, patient, or trainee, taping the needle tip to an arm band, or taping the needle tip to an arm cradle. In FIG. 18, a protective, insulative sheath has been peeled away from the simulated cannula shown to expose first and second conductive wires 1824 and 1828 that run the length of the simulated cannula, for example, as shown in FIG. 14. In FIG. 14, similarly, almost all of the protective, insulative sheath 1490 has been peeled away to show first and second conductive wires akin to first and second conductive wires 1824 and 1828. Either or both of first and second conductive wires 1824 and 1828 can be insulated along its length or their lengths, except for at the ends of first and second conductive wires 1824 and 1828 where the two wires are wound together, to each other, to form wound needle end 1804. One of first and second conductive wires 1824 and 1828 is configured to be electrically connected to resistor 1481 or 1483, while the other of first and second conductive wires 1824 and 1828 is configured to connect to the circuit including buzzer 1464 through lead 1466.

The training system of the present invention can be used in conjunction with a virtual reality (VR) simulation system, for example, through a first-person (self) cannulation simulation or through a second-person cannulation simulation. The VR simulation system can be operatively connected to the training system. The simulation can be presented in a way that utilizes the tactile elements of the training system to augment what the user would be viewing through a VR headset. A VR headset can be used to afford a more realistic appearance for the simulation and to enable a lesson to be immersive and surrounded by contextual digital materials, such as labeling, tips, suggestions, other lesson-appropriate information, combinations thereof, and the like. For example, an angle-of-approach, a direction of a needle, and the like, can be evaluated digitally to provide automated feedback. Bruit, other sounds, and the like can be added to the experience via a VR headset.

The training system can be used in conjunction with an augmented reality (AR) simulation system, for example, through a first-person (self) cannulation simulation or through a second-person cannulation simulation. The AR simulation system can be operatively connected to the training system. An AR headset can be used. When using an AR headset, a self-cannulating user can be enabled to have the same auditory benefits as with a VR headset, but an image stream can be layered on top of what the user is actually viewing. The tactile elements of the device can be partnered with additional digitally placed elements and cues from the AR simulation system to afford a richer experience for the user.

With a VR or AR simulation system, a guidance system can be included. The guidance system can include at least an augmented reality device having a display, a camera configured to capture image data, and a computing system. The computing system can include at least a processor and a memory. The memory can store computer-readable instructions that, upon execution by the processor, configure the computing system to perform steps. The computing system can receive a user input from a user, and the user input can include a target internal vein or artery of the patient. The computing system can process image data captured by the camera, and the image data can include at least an image of the vasculature of the patient or of the cannulation training system, for example, an image of the simulated access. Processing the image data can include identifying at least one vasculature or access feature of the patient or training system. The computing system can determine a cannulation location based on the processed image data and the user input. The computing system can generate output data for the display of the VR or AR device. The output data can include target indicia. With an AR system, the target indicia can overlay an image of the patient or training system at the vasculature or simulated access location.

An augmented reality device can be used that includes the computing system, the display, and the camera. Alternatively, the augmented reality device can be separate from the computing system and the camera, and, in such embodiments, the computing system, the augmented reality device, and the camera can communicate with one another via a hard-wired interface, a wireless interface, or a combination thereof.

The augmented reality device can include a smart device. The smart device can be, for example, a smart phone, a tablet, a smart watch, smart glasses, or the like. The smart device can be a smart phone that can include, for example, a touchscreen interface. The computer-readable instructions can be in the form of application software loaded on the memory, for example, an app loaded on a smart phone or tablet.

The smart device can be in the form of a head mount, such as smart glasses. The head mount can include the computing system, the display, the camera, and other sensors. The display of the head mount can be at least partially transparent. The at least partially transparent display can be configured to display augmentation graphics such as semi-opaque images that appear to a user to be superimposed on at least a portion of a natural field of view of the user. Other apparatus, devices, components, systems, and methods related to VR and AR, which can be used or incorporated in accordance with the present invention, include those described, for example, in U.S. Patent No. US 10,726,744 B2.

## Claims

1. A self-cannulation training system (100) comprising:
a cannulation pad (104) comprising a cannulation electrical circuit conductor (808), an infiltration electrical circuit conductor (816), and an insulating layer (812) electrically insulating the cannulation electrical circuit conductor (808) from the infiltration electrical circuit conductor (816);
a simulated access (116) configured to be electrically connected to the cannulation electrical circuit conductor (808) and comprising an outer sheath and an electrically conductive material retained inside the sheath;
a simulated cannula (121, 122) having a length and comprising a cannulation needle (616) at a first end thereof, a cannula connector (612) at a second, opposite end thereof, and an electrical conductor (608) extending along the length and electrically connecting the cannulation needle (616) with the cannula connector (612);
a control unit (124) comprising a power source (128), a first electrical connector (510, 804) for connecting the power source (128) to both the cannulation electrical circuit conductor (808) and the infiltration electrical circuit conductor (816), and a second electrical connector (511) for connecting the power source (128) to the cannula connector (612);
a first indicator (632) in electrical contact with the electrical conductor (608) and configured to be activated when the cannula needle electrically contacts the cannulation electrical circuit conductor (808) to form a cannulation electrical circuit; and
a second indicator (552), different than the first indicator (632), in electrical contact with the electrical conductor (608) and configured to be activated when the cannula needle (616) electrically contacts the infiltration electrical circuit conductor (816) to form an infiltration electrical circuit.

2. The self-cannulation training system (100) of claim 1, wherein the first indicator (632) comprises a light indicator and the second indicator (552) comprises a vibrator, a sound alarm, or a combination thereof; or wherein the first indicator comprises a red light-emitting diode.

3. The self-cannulation training system (100) of claim 1, wherein the electrical conductor (608) of the simulated cannula (121, 122) comprises a co-axial cable and the cannula connector (612) comprises an RCA cable connector (652, 653).

4. The self-cannulation training system (100) of claim 1, further comprising a second simulated cannula having a length and comprising a second cannulation needle at a first end thereof, a second cannula connector at a second, opposite end thereof, and a second electrical conductor extending along the length of the second simulated cannula and electrically connecting the second cannulation needle with the second cannula connector.

5. The self-cannulation training system (100) of claim 1, wherein the simulated access (116) is electrically connected to the cannulation electrical circuit conductor (808), the first electrical connector (510, 804) connects the power source (128) to both the cannulation electrical circuit conductor (808) and the infiltration electrical circuit conductor (816), and the second electrical connector (511) connects the power source (128) to the cannula connector (612).

6. The self-cannulation training system (100) of claim 1, wherein the simulated access (116) connects the power source (128) to both the cannulation electrical circuit conductor (808) and to the infiltration electrical circuit conductor (816), through magnetic electrical connectors.

7. The self-cannulation training system (100) of claim 1, further comprising an armband (108), wherein the armband (108) and the cannulation pad (104) are configured to be fastened together, the self-cannulation training system (100) preferably yet further comprising a simulated skin covering (132), wherein the armband (108) and the simulated skin covering (132) are configured to be fastened together, the simulated skin covering (132) has an outer surface, and the outer surface has a skin tone color.

8. The self-cannulation training system (100) of claim 7, further comprising a wrist band (136), wherein the wrist band (136) and the control unit (124) are configured to be fastened together, the wrist band (136) comprises a fastener patch including at least one of hook fasteners (137) and loop fasteners (138), the control unit (124) comprises a unit fastener patch including at least one of hook fasteners and loop fasteners, and the wrist band (136) comprises a battery pocket for accommodating the power source.

9. The self-cannulation training system (100) of claim 1, further comprising an arm cradle (112), the arm cradle (112) having a through-hole for accommodating an arm (300), wherein the arm cradle (112) and the cannulation pad (104) are configured to be fastened together, the arm cradle (112) comprises a fastener patch (1012) including at least one of hook fasteners and loop fasteners, the cannulation pad (104) comprises a pad fastener patch (830) including at least one of hook fasteners (831) and loop fasteners (833), the arm cradle (112) further comprises a second fastener patch (1016) including at least one of hook fasteners and loop fasteners, and the control unit (124) comprises a fastener patch including at least one of hook fasteners and loop fasteners, wherein the arm cradle (112) preferably comprises a plastic material wrapped with a NEOPRENE^{®} material.

10. The self-cannulation training system (100) of claim 1, wherein the electrically conductive material of the simulated access (116) comprises an electrically conductive gel (730) and the electrically conductive gel (730) comprises the reaction product of borax, glue, salt, and water.

11. The self-cannulation training system (100) of claim 1, further comprising a virtual reality simulation system, an augmented reality simulation system, or both, wherein the virtual reality simulation system, augmented reality simulation system, or both, are operatively connected to the training system (100).

12. A method of training a patient for self-cannulation, the method comprising:
mounting a cannulation pad (104) on the patient, the cannulation pad (104) comprising a cannulation electrical circuit conductor (808), an infiltration electrical circuit conductor (816), and an insulating layer (812) electrically insulating the cannulation electrical circuit conductor (808) from the infiltration electrical circuit conductor (816);
electrically connecting a simulated access (116) to the cannulation electrical circuit conductor (808), the simulated access (116) comprising an outer sheath and an electrically conductive material retained inside the sheath;
electrically connecting a power source (128) to both the cannulation electrical circuit conductor (808) and to the infiltration electrical circuit conductor (816);
electrically connecting the power source (128) to a simulated cannula (121, 122), the simulated cannula (121, 122) having a length and comprising a cannulation needle (616) at a first end thereof, a cannula connector (612) at a second, opposite end thereof, and an electrical conductor (608) extending along the length and electrically connecting the cannulation needle (616) with the cannula connector (612), wherein the cannula connector (612) is electrically connected to the power source (128);
optionally, fastening a simulated skin covering (132) over the simulated access (116); and
having the patient insert the cannulation needle (616) into the simulated access (116) to train for inserting a real cannulation needle into a real access.

13. The method of claim 12, wherein, when the patient inserts the cannulation needle (616) into the simulated access (116) such that a distal tip of the cannulation needle (616) rests in the electrically conductive material, a first indicator (632) is activated to indicate that a proper cannulation into the simulated access (116) has been achieved, wherein preferably, when the patient inserts the cannulation needle (616) into the cannulation pad (104) such that the distal tip of the cannulation needle (616) contacts the infiltration electrical circuit conductor (816), a second indicator (552) is activated to indicate that an improper cannulation into the simulated access (116) has resulted, wherein more preferably the first indicator (632) comprises a red light and the second indicator comprises a buzzer.

14. The method of claim 12, wherein the mounting the cannulation pad (104) on the patient comprises fastening an arm band (108) to a forearm (300) of the patient and fastening the cannulation pad (104) to the arm band (108).

15. The method of claim 12, wherein the mounting the cannulation pad (104) on the patient comprises placing a forearm (300) of the patient into an arm cradle (112) and fastening the cannulation pad (104) to the arm cradle (112).

## Patentansprüche

1. Selbstkanülierungs-Trainingssystem (100), umfassend:
ein Kanülierungspad (104), umfassend einen Kanülierungs-Stromkreisleiter (808), einen Infiltrations-Stromkreisleiter (816) und eine Isolierschicht (812), die den Kanülierungs-Stromkreisleiter (808) elektrisch vom Infiltrations-Stromkreisleiter (816) isoliert;
einen simulierten Zugang (116), der dazu ausgelegt ist, elektrisch mit dem Kanülierungs-Stromkreisleiter (808) verbunden zu werden, und der eine äußere Hülle sowie ein elektrisch leitfähiges Material umfasst, das innerhalb der Hülle gehalten ist;
eine simulierte Kanüle (121, 122) mit einer Länge, die an einem ersten Ende eine Kanülierungsnadel (616), an einem zweiten, entgegengesetzten Ende einen Kanülenanschluss (612) sowie einen elektrischen Leiter (608) umfasst, der sich entlang der Länge erstreckt und die Kanülierungsnadel (616) elektrisch mit dem Kanülenanschluss (612) verbindet;
eine Steuereinheit (124), umfassend eine Stromquelle (128), einen ersten elektrischen Anschluss (510, 804) zum Verbinden der Stromquelle (128) sowohl mit dem Kanülierungs-Stromkreisleiter (808) als auch mit dem Infiltrations-Stromkreisleiter (816) sowie einen zweiten elektrischen Anschluss (511) zum Verbinden der Stromquelle (128) mit dem Kanülenanschluss (612);
einen ersten Indikator (632), der in elektrischem Kontakt mit dem elektrischen Leiter (608) steht und dazu ausgelegt ist, aktiviert zu werden, wenn die Kanülierungsnadel den Kanülierungs-Stromkreisleiter (808) elektrisch berührt, um einen Kanülierungsstromkreis zu bilden; und
einen zweiten Indikator (552), der sich vom ersten Indikator (632) unterscheidet, der in elektrischem Kontakt mit dem elektrischen Leiter (608) steht und dazu ausgelegt ist, aktiviert zu werden, wenn die Kanülierungsnadel (616) den Infiltrations-Stromkreisleiter (816) elektrisch berührt, um einen Infiltrationsstromkreis zu bilden.

2. Selbstkanülierungs-Trainingssystem (100) nach Anspruch 1, wobei der erste Indikator (632) einen Lichtindikator umfasst und der zweite Indikator (552) einen Vibrator, einen akustischen Alarm oder eine Kombination davon umfasst; oder wobei der erste Indikator eine rote Leuchtdiode umfasst.

3. Selbstkanülierungs-Trainingssystem (100) nach Anspruch 1, wobei der elektrische Leiter (608) der simulierten Kanüle (121, 122) ein Koaxialkabel umfasst und der Kanülenanschluss (612) einen RCA-Kabelstecker (652, 653) umfasst.

4. Selbstkanülierungs-Trainingssystem (100) nach Anspruch 1, ferner umfassend eine zweite simulierte Kanüle mit einer Länge, die an einem ersten Ende eine zweite Kanülierungsnadel, an einem zweiten, entgegengesetzten Ende einen zweiten Kanülenanschluss sowie einen zweiten elektrischen Leiter umfasst, der sich entlang der Länge der zweiten simulierten Kanüle erstreckt und die zweite Kanülierungsnadel elektrisch mit dem zweiten Kanülenanschluss verbindet.

5. Selbstkanülierungs-Trainingssystem (100) nach Anspruch 1, wobei der simulierte Zugang (116) elektrisch mit dem Kanülierungs-Stromkreisleiter (808) verbunden ist, der erste elektrische Anschluss (510, 804) die Stromquelle (128) sowohl mit dem Kanülierungs-Stromkreisleiter (808) als auch mit dem Infiltrations-Stromkreisleiter (816) verbindet und der zweite elektrische Anschluss (511) die Stromquelle (128) mit dem Kanülenanschluss (612) verbindet.

6. Selbstkanülierungs-Trainingssystem (100) nach Anspruch 1, wobei der simulierte Zugang (116) die Stromquelle (128) sowohl mit dem Kanülierungs-Stromkreisleiter (808) als auch mit dem Infiltrations-Stromkreisleiter (816) über magnetische elektrische Anschlüsse verbindet.

7. Selbstkanülierungs-Trainingssystem (100) nach Anspruch 1, ferner umfassend ein Armband (108), wobei das Armband (108) und das Kanülierungspad (104) dazu ausgelegt sind, miteinander befestigt zu werden, wobei das Selbstkanülierungs-Trainingssystem (100) vorzugsweise ferner eine simulierte Hautabdeckung (132) umfasst, wobei das Armband (108) und die simulierte Hautabdeckung (132) dazu ausgelegt sind, miteinander befestigt zu werden, wobei die simulierte Hautabdeckung (132) eine äußere Oberfläche aufweist und die äußere Oberfläche eine hauttonfarbene Farbe aufweist.

8. Selbstkanülierungs-Trainingssystem (100) nach Anspruch 7, ferner umfassend ein Handgelenkband (136), wobei das Handgelenkband (136) und die Steuereinheit (124) dazu ausgelegt sind, miteinander befestigt zu werden, wobei das Handgelenkband (136) ein Befestigungspatch umfasst, das mindestens eines von Hakenbefestigern (137) und Schlaufenbefestigern (138) einschließt, wobei die Steuereinheit (124) ein Geräte-Befestigungspatch umfasst, das mindestens eines von Hakenbefestigern und Schlaufenbefestigern einschließt, und wobei das Handgelenkband (136) eine Batterietasche zur Aufnahme der Stromquelle umfasst.

9. Selbstkanülierungs-Trainingssystem (100) nach Anspruch 1, ferner umfassend eine Armauflage (112), wobei die Armauflage (112) eine Durchgangsöffnung zur Aufnahme eines Arms (300) aufweist, wobei die Armauflage (112) und das Kanülierungspad (104) dazu ausgelegt sind, miteinander befestigt zu werden, wobei die Armauflage (112) ein Befestigungspatch (1012) umfasst, das mindestens eines von Hakenbefestigern und Schlaufenbefestigern einschließt, wobei das Kanülierungspad (104) ein Pad-Befestigungspatch (830) umfasst, das mindestens eines von Hakenbefestigern (831) und Schlaufenbefestigern (833) einschließt, wobei die Armauflage (112) ferner ein zweites Befestigungspatch (1016) umfasst, das mindestens eines von Hakenbefestigern und Schlaufenbefestigern einschließt, und wobei die Steuereinheit (124) ein Befestigungspatch umfasst, das mindestens eines von Hakenbefestigern und Schlaufenbefestigern einschließt, wobei die Armauflage (112) vorzugsweise ein Kunststoffmaterial umfasst, das mit einem NEOPRENE^{®}-Material ummantelt ist.

10. Selbstkanülierungs-Trainingssystem (100) nach Anspruch 1, wobei das elektrisch leitfähige Material des simulierten Zugangs (116) ein elektrisch leitfähiges Gel (730) umfasst und das elektrisch leitfähige Gel (730) das Reaktionsprodukt von Borax, Klebstoff, Salz und Wasser umfasst.

11. Selbstkanülierungs-Trainingssystem (100) nach Anspruch 1, ferner umfassend ein Virtual-Reality-Simulationssystem, ein Augmented-Reality-Simulationssystem oder beides, wobei das Virtual-Reality-Simulationssystem, das Augmented-Reality-Simulationssystem oder beides funktionsmäßig mit dem Trainingssystem (100) verbunden ist.

12. Verfahren zum Trainieren eines Patienten zur Selbstkanülierung, umfassend:
Anbringen eines Kanülierungspads (104) am Patienten, wobei das Kanülierungspad (104) einen Kanülierungs-Stromkreisleiter (808), einen Infiltrations-Stromkreisleiter (816) und eine Isolierschicht (812) umfasst, die den Kanülierungs-Stromkreisleiter (808) elektrisch vom Infiltrations-Stromkreisleiter (816) isoliert;
elektrisches Verbinden eines simulierten Zugangs (116) mit dem Kanülierungs-Stromkreisleiter (808), wobei der simulierte Zugang (116) eine äußere Hülle sowie ein elektrisch leitfähiges Material umfasst, das innerhalb der Hülle gehalten ist;
elektrisches Verbinden einer Stromquelle (128) sowohl mit dem Kanülierungs-Stromkreisleiter (808) als auch mit dem Infiltrations-Stromkreisleiter (816);
elektrisches Verbinden der Stromquelle (128) mit einer simulierten Kanüle (121, 122), wobei die simulierte Kanüle (121, 122) eine Länge aufweist und an einem ersten Ende eine Kanülierungsnadel (616), an einem zweiten, entgegengesetzten Ende einen Kanülenanschluss (612) sowie einen elektrischen Leiter (608) umfasst, der sich entlang der Länge erstreckt und die Kanülierungsnadel (616) elektrisch mit dem Kanülenanschluss (612) verbindet, wobei der Kanülenanschluss (612) elektrisch mit der Stromquelle (128) verbunden ist;
optional das Befestigen einer simulierten Hautabdeckung (132) über dem simulierten Zugang (116); und
Einführen der Kanülierungsnadel (616) durch den Patienten in den simulierten Zugang (116), um das Einführen einer echten Kanülierungsnadel in einen echten Zugang zu trainieren.

13. Verfahren nach Anspruch 12, wobei, wenn der Patient die Kanülierungsnadel (616) so in den simulierten Zugang (116) einführt, dass eine distale Spitze der Kanülierungsnadel (616) im elektrisch leitfähigen Material liegt, ein erster Indikator (632) aktiviert wird, um anzuzeigen, dass eine ordnungsgemäße Kanülierung in den simulierten Zugang (116) erreicht wurde, wobei vorzugsweise, wenn der Patient die Kanülierungsnadel (616) so in das Kanülierungspad (104) einführt, dass die distale Spitze der Kanülierungsnadel (616) den Infiltrations-Stromkreisleiter (816) berührt, ein zweiter Indikator (552) aktiviert wird, um anzuzeigen, dass eine fehlerhafte Kanülierung in den simulierten Zugang (116) erfolgt ist, wobei noch vorzugsweise der erste Indikator (632) ein rotes Licht umfasst und der zweite Indikator einen Summer umfasst.

14. Verfahren nach Anspruch 12, wobei das Anbringen des Kanülierungspads (104) am Patienten das Befestigen eines Armbands (108) an einem Unterarm (300) des Patienten und das Befestigen des Kanülierungspads (104) am Armband (108) umfasst.

15. Verfahren nach Anspruch 12, wobei das Anbringen des Kanülierungspads (104) am Patienten das Platzieren eines Unterarms (300) des Patienten in einer Armauflage (112) und das Befestigen des Kanülierungspads (104) an der Armauflage (112) umfasst.

## Revendications

1. Un système d'entraînement à l'auto-canulation (100), comprenant :
un coussinet de canulation (104) comprenant un conducteur de circuit électrique de canulation (808), un conducteur de circuit électrique d'infiltration (816) et une couche isolante (812) isolant électriquement le conducteur de circuit électrique de canulation (808) du conducteur de circuit électrique d'infiltration (816) ;
un accès simulé (116) configuré pour être électriquement connecté au conducteur de circuit électrique de canulation (808) et comprenant une gaine externe ainsi qu'un matériau électriquement conducteur retenu à l'intérieur de la gaine ;
une canule simulée (121, 122) ayant une longueur et comprenant une aiguille de canulation (616) à une première extrémité, un connecteur de canule (612) à une seconde extrémité opposée, et un conducteur électrique (608) s'étendant le long de la longueur et reliant électriquement l'aiguille de canulation (616) au connecteur de canule (612) ;
une unité de commande (124) comprenant une source d'alimentation (128), un premier connecteur électrique (510, 804) destiné à connecter la source d'alimentation (128) à la fois au conducteur de circuit électrique de canulation (808) et au conducteur de circuit électrique d'infiltration (816), et un second connecteur électrique (511) destiné à connecter la source d'alimentation (128) au connecteur de canule (612) ;
un premier indicateur (632) en contact électrique avec le conducteur électrique (608) et configuré pour être activé lorsque l'aiguille de canulation entre en contact électrique avec le conducteur de circuit électrique de canulation (808) afin de former un circuit électrique de canulation ; et
un second indicateur (552), différent du premier indicateur (632), en contact électrique avec le conducteur électrique (608) et configuré pour être activé lorsque l'aiguille de canulation (616) entre en contact électrique avec le conducteur de circuit électrique d'infiltration (816) afin de former un circuit électrique d'infiltration.

2. Le système d'entraînement à l'auto-canulation (100) selon la revendication 1, dans lequel le premier indicateur (632) comprend un indicateur lumineux et le second indicateur (552) comprend un vibreur, une alarme sonore ou une combinaison de ceux-ci ; ou dans lequel le premier indicateur comprend une diode électroluminescente rouge.

3. Le système d'entraînement à l'auto-canulation (100) selon la revendication 1, dans lequel le conducteur électrique (608) de la canule simulée (121, 122) comprend un câble coaxial et le connecteur de canule (612) comprend un connecteur de câble RCA (652, 653).

4. Le système d'entraînement à l'auto-canulation (100) selon la revendication 1, comprenant en outre une seconde canule simulée ayant une longueur et comprenant une seconde aiguille de canulation à une première extrémité, un second connecteur de canule à une seconde extrémité opposée, et un second conducteur électrique s'étendant le long de la longueur de la seconde canule simulée et reliant électriquement la seconde aiguille de canulation au second connecteur de canule.

5. Le système d'entraînement à l'auto-canulation (100) selon la revendication 1, dans lequel l'accès simulé (116) est électriquement connecté au conducteur de circuit électrique de canulation (808), le premier connecteur électrique (510, 804) connecte la source d'alimentation (128) à la fois au conducteur de circuit électrique de canulation (808) et au conducteur de circuit électrique d'infiltration (816), et le second connecteur électrique (511) connecte la source d'alimentation (128) au connecteur de canule (612).

6. Le système d'entraînement à l'auto-canulation (100) selon la revendication 1, dans lequel l'accès simulé (116) connecte la source d'alimentation (128) à la fois au conducteur de circuit électrique de canulation (808) et au conducteur de circuit électrique d'infiltration (816) par l'intermédiaire de connecteurs électriques magnétiques.

7. Le système d'entraînement à l'auto-canulation (100) selon la revendication 1, comprenant en outre un brassard (108), dans lequel le brassard (108) et le coussinet de canulation (104) sont configurés pour être fixés ensemble, le système d'entraînement à l'auto-canulation (100) comprenant de préférence en outre un revêtement cutané simulé (132), dans lequel le brassard (108) et le revêtement cutané simulé (132) sont configurés pour être fixés ensemble, le revêtement cutané simulé (132) ayant une surface externe, et la surface externe ayant une couleur de teinte de peau.

8. Le système d'entraînement à l'auto-canulation (100) selon la revendication 7, comprenant en outre un bracelet de poignet (136), dans lequel le bracelet de poignet (136) et l'unité de commande (124) sont configurés pour être fixés ensemble, le bracelet de poignet (136) comprenant une pastille de fixation incluant au moins l'un de dispositifs de fixation à crochets (137) et de dispositifs de fixation à boucles (138), l'unité de commande (124) comprenant une pastille de fixation de l'unité incluant au moins l'un de dispositifs de fixation à crochets et de dispositifs de fixation à boucles, et le bracelet de poignet (136) comprenant une poche pour batterie destinée à recevoir la source d'alimentation.

9. Le système d'entraînement à l'auto-canulation (100) selon la revendication 1, comprenant en outre un support de bras (112), le support de bras (112) ayant un orifice traversant destiné à recevoir un bras (300), dans lequel le support de bras (112) et le coussinet de canulation (104) sont configurés pour être fixés ensemble, le support de bras (112) comprenant une pastille de fixation (1012) incluant au moins l'un de dispositifs de fixation à crochets et de dispositifs de fixation à boucles, le coussinet de canulation (104) comprenant une pastille de fixation du coussinet (830) incluant au moins l'un de dispositifs de fixation à crochets (831) et de dispositifs de fixation à boucles (833), le support de bras (112) comprenant en outre une seconde pastille de fixation (1016) incluant au moins l'un de dispositifs de fixation à crochets et de dispositifs de fixation à boucles, et l'unité de commande (124) comprenant une pastille de fixation incluant au moins l'un de dispositifs de fixation à crochets et de dispositifs de fixation à boucles, le support de bras (112) comprenant de préférence un matériau plastique enveloppé d'un matériau NEOPRENE^{®}.

10. Le système d'entraînement à l'auto-canulation (100) selon la revendication 1, dans lequel le matériau électriquement conducteur de l'accès simulé (116) comprend un gel électriquement conducteur (730) et le gel électriquement conducteur (730) comprend le produit de réaction du borax, de la colle, du sel et de l'eau.

11. Le système d'entraînement à l'auto-canulation (100) selon la revendication 1, comprenant en outre un système de simulation en réalité virtuelle, un système de simulation en réalité augmentée, ou les deux, dans lequel le système de simulation en réalité virtuelle, le système de simulation en réalité augmentée, ou les deux, sont reliés de manière opérationnelle au système d'entraînement (100).

12. Un procédé d'entraînement d'un patient à l'auto-canulation, le procédé comprenant :
le montage d'un coussinet de canulation (104) sur le patient, le coussinet de canulation (104) comprenant un conducteur de circuit électrique de canulation (808), un conducteur de circuit électrique d'infiltration (816) et une couche isolante (812) isolant électriquement le conducteur de circuit électrique de canulation (808) du conducteur de circuit électrique d'infiltration (816) ;
la connexion électrique d'un accès simulé (116) au conducteur de circuit électrique de canulation (808), l'accès simulé (116) comprenant une gaine externe et un matériau électriquement conducteur retenu à l'intérieur de la gaine ;
la connexion électrique d'une source d'alimentation (128) à la fois au conducteur de circuit électrique de canulation (808) et au conducteur de circuit électrique d'infiltration (816) ;
la connexion électrique de la source d'alimentation (128) à une canule simulée (121, 122), la canule simulée (121, 122) ayant une longueur et comprenant une aiguille de canulation (616) à une première extrémité, un connecteur de canule (612) à une seconde extrémité opposée, et un conducteur électrique (608) s'étendant le long de la longueur et reliant électriquement l'aiguille de canulation (616) au connecteur de canule (612), dans lequel le connecteur de canule (612) est électriquement connecté à la source d'alimentation (128) ;
en option, la fixation d'un revêtement cutané simulé (132) au-dessus de l'accès simulé (116) ; et
le fait que le patient insère l'aiguille de canulation (616) dans l'accès simulé (116) afin de s'entraîner à insérer une véritable aiguille de canulation dans un véritable accès.

13. Le procédé selon la revendication 12, dans lequel, lorsque le patient insère l'aiguille de canulation (616) dans l'accès simulé (116) de sorte qu'une pointe distale de l'aiguille de canulation (616) repose dans le matériau électriquement conducteur, un premier indicateur (632) est activé afin d'indiquer qu'une canulation correcte dans l'accès simulé (116) a été obtenue, dans lequel de préférence, lorsque le patient insère l'aiguille de canulation (616) dans le coussinet de canulation (104) de sorte que la pointe distale de l'aiguille de canulation (616) entre en contact avec le conducteur de circuit électrique d'infiltration (816), un second indicateur (552) est activé afin d'indiquer qu'une canulation incorrecte dans l'accès simulé (116) a eu lieu, dans lequel plus préférablement le premier indicateur (632) comprend une lumière rouge et le second indicateur comprend un avertisseur sonore.

14. Le procédé selon la revendication 12, dans lequel le montage du coussinet de canulation (104) sur le patient comprend la fixation d'un brassard (108) sur un avant-bras (300) du patient et la fixation du coussinet de canulation (104) sur le brassard (108).

15. Le procédé selon la revendication 12, dans lequel le montage du coussinet de canulation (104) sur le patient comprend le placement d'un avant-bras (300) du patient dans un support de bras (112) et la fixation du coussinet de canulation (104) sur le support de bras (112).
